Europäisches Patentamt

European Patent Office

Office européen des brevets

(11) Publication number: **0 017 219**
**B1**

# EUROPEAN PATENT SPECIFICATION

(45) Date of publication of patent specification: **14.10.87**

(21) Application number: **80101757.5**

(22) Date of filing: **02.04.80**

(51) Int. Cl.⁴: **F 02 D 37/02** // F02D5/02, F02P5/04, F02D21/08

(54) Electronic type engine control method and apparatus.

(30) Priority: 06.04.79 JP 40901/79
06.06.79 JP 70067/79

(43) Date of publication of application:
15.10.80 Bulletin 80/21

(45) Publication of the grant of the patent:
14.10.87 Bulletin 87/42

(84) Designated Contracting States:
DE FR GB

(56) References cited:
GB-A-2 007 400
US-A-3 969 614
US-A-4 084 558
US-A-4 132 199
US-A-4 163 282

IEEE INTERCON CONFERENCE RECORD, 8-10
April 1975, New York, US, The Institute of
Electrical and Electronic Engineers, S.S. Devlin:
"Microprocessors as automotive on-board
controllers" page 16/3

(73) Proprietor: Hitachi, Ltd.
5-1, Marunouchi 1-chome
Chiyoda-ku Tokyo 100 (JP)

(72) Inventor: Furuhashi, Toshio
993-1, Horicho
Mito-shi (JP)

(74) Representative: Patentanwälte Beetz sen. -
Beetz jun. Timpe - Siegfried - Schmitt-Fumian
Steinsdorfstrasse 10
D-8000 München 22 (DE)

(56) References cited:
SOCIETY OF MANUFACTURING ENGINEERS,
Proceedings of the international symposium
on industrial robots, Chicago, September 22-
24, 1975, Proc. S.E.B. Carne et al.: "An industrial
robot with minicomputer control" pages 215-
229

V. KUSSL "Technik der Prozess Daten
Verarbeitung" pages 94 and 95

Courier Press, Leamington Spa, England.

## Description

The present invention relates to a method of electronically controlling the operation of internal combustion engines and an apparatus for carrying out that method, in which the internal combustion engine is controlled through digital processings and arithmetic operations of a central processing unit (CPU).

A method and a system for controlling internal combustion engines (hereinafter also simply referred to as engines) through a CPU in accordance with predetermined programs are disclosed in the U.S. Patents Nos. 3,969,614 and 4,163,282. According to the prior art control techniques, a series of programs prepared for fetching information from various sensors detecting engine operation conditions and setting control quantities for every function to be controlled are executed in accordance with the detected operation conditions to thereby control the operation of the engine. Such control programs include a fuel quantity control program, an ignition timing program and an engine initiation program, for example. The fuel quantity control program and the ignition timing control program are executed in synchronism with detection of a predetermined crank angle during the revolution of the engine, whereby signals representing the fuel supply quantity as well as the ignition timing advance angle which are arithmetically determined through execution of the programs described above are supplied to associated pulse output circuits.

In the engine control system in which programs are executed on the basis of certain conditions of the engine, the load state of the CPU undergoes remarkable variations in dependence on the operational conditions of the engine which is very disadvantageous.

Accordingly, when the operational conditions change rapidly, the load imposed on the CPU will vary correspondingly to a remarkable extent, which affects the serviceability of the CPU. If, for example, the speed of the engine varies from a low speed to an intermediate speed and then to a high speed, the number of requests for arithmetic operations issued to the CPU, i.e. the number of tasks to be executed, will be increased as the engine speed is increased, which eventually results in that the CPU becomes difficult to deal with the increased number of requests. On the other hand, the load ratio of the CPU is decreased at low speed operation of the engine, which means that the capacity of the CPU is not fully utilized. In this way, the hitherto known control method and system cannot provide control functions in a manner satisfactorily compatible with the processing capacity of the CPU.

Further, when contents of one of the plural control programs are to be altered and new programs have to be added, all the programs need to be renewed in the case of the control systems disclosed in the prior art patents indicated above.

Besides, there is provided no supervisory program for monitoring the execution of the plural control programs in the prior art control systems.

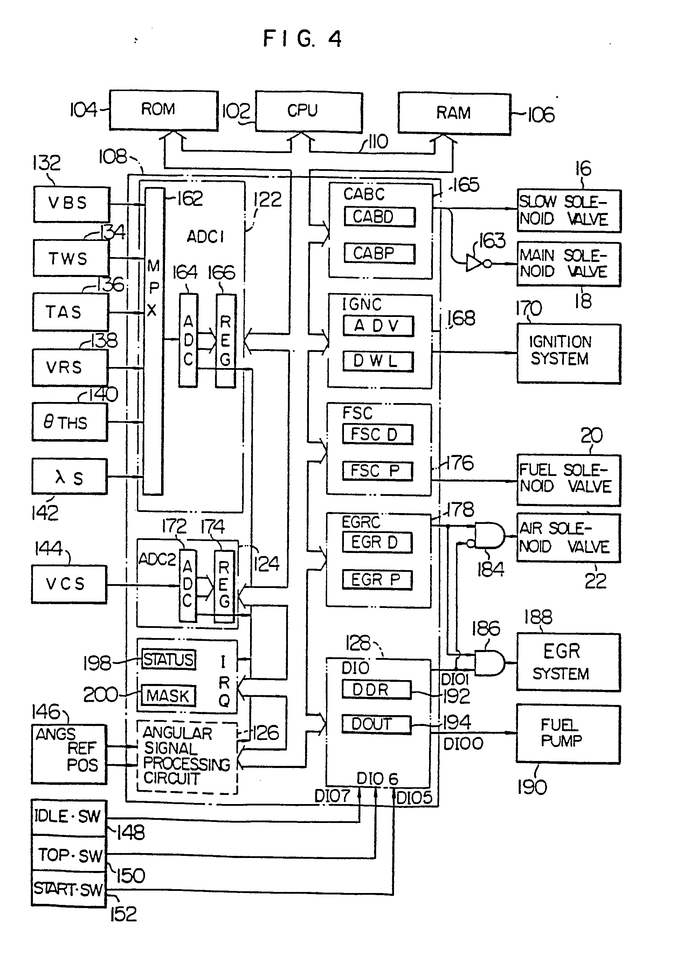

The circuit shown in the Fig. 4 of the US—A—4 163 282 corresponding to DE—A—27 42765 generates interrupt signals $\overline{INT0}$, $\overline{INT1}$, $\overline{INT2}$ and $\overline{INT3}$, the interrupt signal $\overline{INT0}$ being synchronized to the engine revolution and being used to activate a service routine for carrying out the following computations:

(1) calculating the spark advance of the engine in relation to the negative pressure appearing upstream of the throttle valve;

(2) calculating the spark retard of the engine in relation to the negative pressure appearing downstream of the throttle valve based on the result calculated at (1);

(3) transferring the results calculated at (2) to the spark timing logic circuit;

(4) calculating the energizing duration of the primary winding of the ignition coil;

(5) transferring the calculation result of (4) to the spark timing logic circuit;

(6) calculationg F/E, the character F representing the amount of air flowing into the intake manifold and the character E representing the rotational speed of the engine; and

(7) transferring the results calculated at (6) and other calculation results to the fuel injection control logic circuit.

The further interrupt signals $\overline{INT1}$ to $\overline{INT3}$ are independent of the engine revolution and actuate further service routine (refer to column 13 tables 1 to 4 of the US—A—4 163 282).

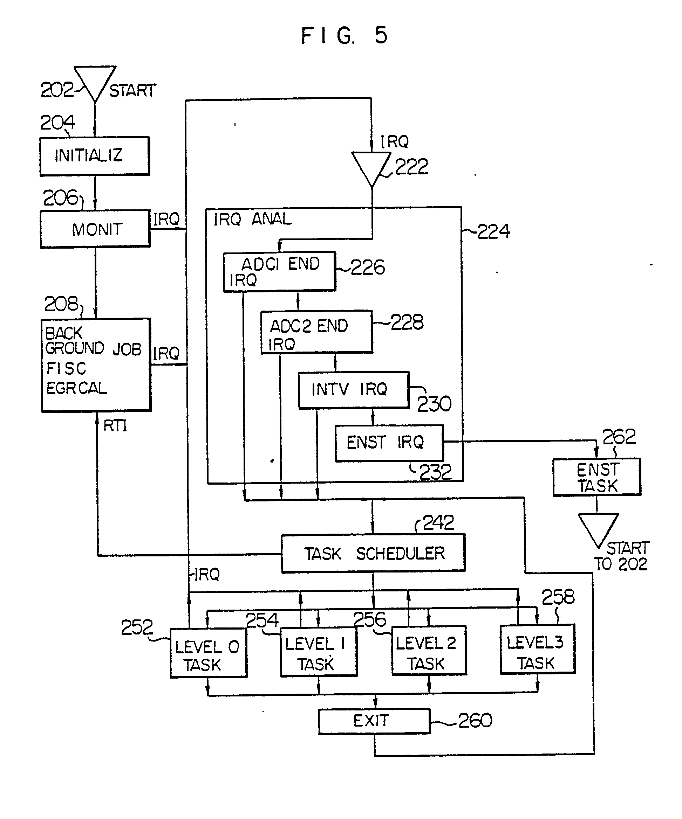

In order to examine the cause of the generation of an interrupt the CPU reads $\overline{IN0}$—$\overline{IN3}$ stored in buffers 361a—364a and when the CPU detects by $\overline{IN1}$ that the cause of interruption is the generation of $\overline{INT1}$ in a step 107 in Fig. 5, an address of a program corresponding to $\overline{IN1}$ (refer to column 13, table 2) is set in a program counter in a step 108, MASK data is set in an interruption mask 310. As a result of this data setting, although only the output Q1 of the mask 310 assumes a logic one state, the outputs Q2—Q4 become logic 0-states and thus the generation of $\overline{IN1}$—$\overline{IN3}$ is inhibited. Therefore, in the prior art the execution of the programs is controlled by allowing the generation of interruption only for a program of high priority level and by inhibiting the generation of interruption which effects the execution of a program of a low priority level.

A further drawback of the prior art known from the US—A—4 163 282 is that the circuit of Fig. 4 is complicated and as the content of the control is more complicated, the circuit becomes very complicated and it is difficult to form the circuit in an LSI.

The IEEE Intercon Conference Record 8—10 April 1975, New York, US, presented at the Institute of Electrical and Electronic Engineers International Convention and Exposition, discloses on page 16/3, col. 1—3 an engine control method and apparatus, whereby the computations are carried out corresponding to

2

## 0 017 219

four hardware priority levels. It is mentioned in col. 3, last paragraph, in connection with Fig. 4 that since the engine position as well as the speed and acceleration should be known for precise engine control, a set of equally spaced (4 in a V8-engine) notches in the engine chamber (fly-wheel) generate reference time pulses in a magnetic pickup. In col. 4, first paragraph it is disclosed that this period is also used in the hardware to generate a pulse train whose repetition method is 1/M-times the time between the previous two reference pulses.

In col. 6 it is disclosed that some of the most significant input variables for engine control change with time constants in the range of 10 to 100 ms. Such a change generally requires a new computation of the output function. The time required to perform these calculations should be less than times of this order. This requires careful programming to achieve these update times with a MOS microcomputer with a typical instruction execution of 10 to 20 µs. The mentioned IEEE Intercon Conference Record does not disclose the manner how the MOS microcomputer is constructed to achieve a reliable and stable control.

In contrary, this reference proposes to achieve speed improvements by incorporating into the output control device information of the control variables with the shortest response time requirements as to achieve by this measure to reduce both, the amount of calculation required for the CPU and the required response time. It is an object of the present invention to provide a method and an apparatus for controlling the operation of internal combustion engines which assure an improved control performance without being influenced by variations in the operational conditions of the engine.

In a method for controlling an internal combustion engine according to the preamble of claim 1 the above object is achieved according to the characterizing features of claim 1.

The method according to the invention for controlling an internal combustion engine comprises the following steps: detecting operational conditions of the engine, computing a plurality of engine control quantities on the basis of the respective detected signals respectively by means of tasks which are carried out by a digital computer in a predetermined priority level sequence corresponding to the influence of the engine control quantity to be computed on the engine operation and activated by a plurality of interrupt signals by a plurality of interrupt signals each having a predetermined timing otherwise interrupted by said interrupt signals, the interrupt signal intervals being allotted to the priority levels of the tasks, whereby the execution of tasks having a lower priority level is interrupted whenever a higher priority level task is to be executed and whereby after the execution of the respective higher level tasks the interrupted task is continued or alternatively another task is executed, and converting the engine control quantities being computed into actuating quantities for the actuators of the engine and is characterized in that engine revolution independent interrupt request signals are generated for requesting activation or interruption of main tasks controlling the normal engine operation, the time intervals of the respective interrupt request signal are allotted to the priority levels of main tasks for controlling the engine operation, the main tasks of the respective priority level are activated upon request by said interrupt request signals at predetermined time intervals independently of the rotational speed of the engine by task activation signals set by the digital computer upon coincidence of the count values of counters being provided for each of the priority levels with preset values representing the task activation time intervals.

The claims 2 to 8 characterize advantageous developments of the method characterized in claim 1.

The apparatus according to the invention for electronically controlling internal combustion engines according to the method of claim 1 comprises sensors detecting the operational conditions of the engine, a central processing unit (CPU) for digital arithmetic processing of the sensor output signals by executing a plurality of tasks each having a corresponding priority level and for generating digital control signals for controlling the engine, an I/O-device being connected between the CPU, the sensors and a plurality of actuators for providing digital input signals for the CPU on the basis of electrical signals provided by the sensors and for generating digital signals as actuating signals for the actuators, a RAM, a ROM and interrupt signal generating means generating interrupt signals for activating the tasks and interrupting tasks of lower priority levels upon corresponding interrupt signals whenever a higher priority level task is to be executed whereby the task being interrupted is continued or a further task is carried out after the execution of a respective higher level task and is characterized in that the interrupt signal generating means generate interrupt request signals independent of the engine revolution which are for normal engine operation allotted to the priority levels of main tasks, whereby for controlling the normal engine operation the main tasks are activated upon request by the interrupt request signals at predetermined intervals independently of the rotational speed of the engine by task activation signals set by the digital computer upon coincidence of the count values of counters being provided for each of the priority levels with preset values representing the task activation time intervals, and include logic means for combining the interrupt request signals to a combined interrupt signal which is transmitted to the CPU through a single line, and status register means storing the respective interrupt request signals, whereby the contents of the status register means can be examined by the CPU for determining the cause for the interrupt signals being generated.

According to the invention, the engine control quantities are classifed into a number of tasks in accordance with the processing functions of the CPU. Different activating intervals are allotted to task programs for executing the tasks in dependence on the influential significance thereof in controlling the engine operation. Thus, the tasks playing an important role in the engine control can be executed more frequently, wherein the load state of the CPU is substantially insusceptible to a variation of the operational

3

# 0 017 219

conditions of the engine. The processing capacity of the CPU can thus be fully utilized to assure improved control performances.

According to one aspect of the invention, a supervisory program for supervising or monitoring the execution of task programs for controlling the engine operation is provided so that the content of a given control program can be altered or new programs can be easily added without any necessity to change other controls or task programs.

The invention will become more apparent from the following description in connection with the accompanying drawings:

Figs. 1 to 22 show a first embodiment of the present invention applied to an internal combustion engine provided with a carburetor, wherein

Fig. 1 is a sectional view of the throttle valve chamber of the carburettor;

Fig. 2 shows schematically the arrangement of the ignition system;

Fig. 3 illustrates schematically the arrangement of an exhaust gas recirculation system;

Fig. 4 shows in a block diagram the general arrangement of the whole control system;

Fig. 5 is a diagram illustrating a program system for the control circuit shown in Fig. 4;

Fig. 6 shows the arrangement of the ROM to illustrate the program contents stored therein;

Fig. 7 is a flow chart illustrating in detail an initializing program (INITIALIZ);

Fig. 8 is a flow chart illustrating details of a monitoring program (MONIT);

Fig. 9 graphically illustrates the ignition timing for the engine starting operation;

Fig. 10 illustrates graphically the fuel supply characteristic for the engine starting operation;

Fig. 11 graphically illustrates the air supply characteristic for the engine starting operation;

Fig. 12 shows details of programs for exhaust gas recirculation (EGRCAL) and for fuel and air valve positioning (FISC);

Fig. 13 is a flow chart illustrating details of the program 224 shown in Fig. 5;

Fig. 14 is a flow chart illustrating details of the task scheduler;

Fig. 15 illustrates the operation for generating activation requests for task programs;

Fig. 16 is a flow chart illustrating details of a program (EXIT) executed upon execution of the task program;

Fig. 17 illustrates the sequence for processing task programs of different priority levels;

Fig. 18 illustrates changes in the state of a task program;

Fig. 19 illustrates changes in the state of a background job program;

Fig. 20 is a flow chart illustrating details of a program of level "0";

Fig. 21 is a flow chart illustrating details of a program of level "1" and

Fig. 22 is a circuit diagram showing an IRQ generating circuit.

Figs. 23 to 28 show a second embodiment of the present invention applied to an internal combustion engine of fuel injection type, wherein,

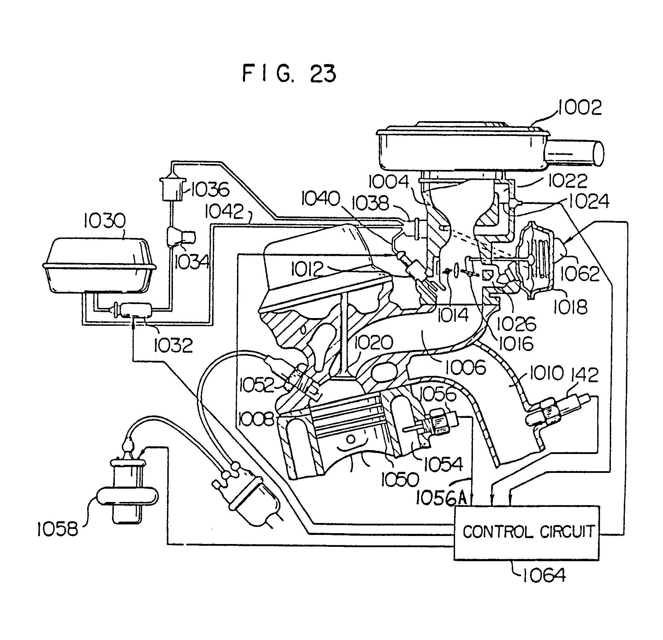

Fig. 23 is a sectional view showing the general arrangement of the engine control system;

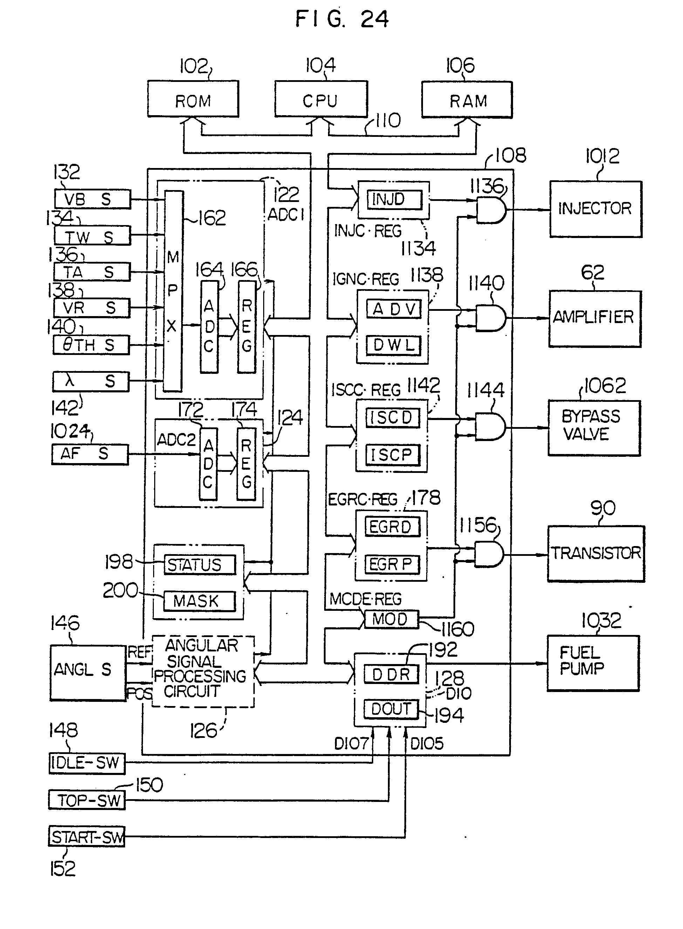

Fig. 24 is a block diagram showing the general arrangement of the whole control system;

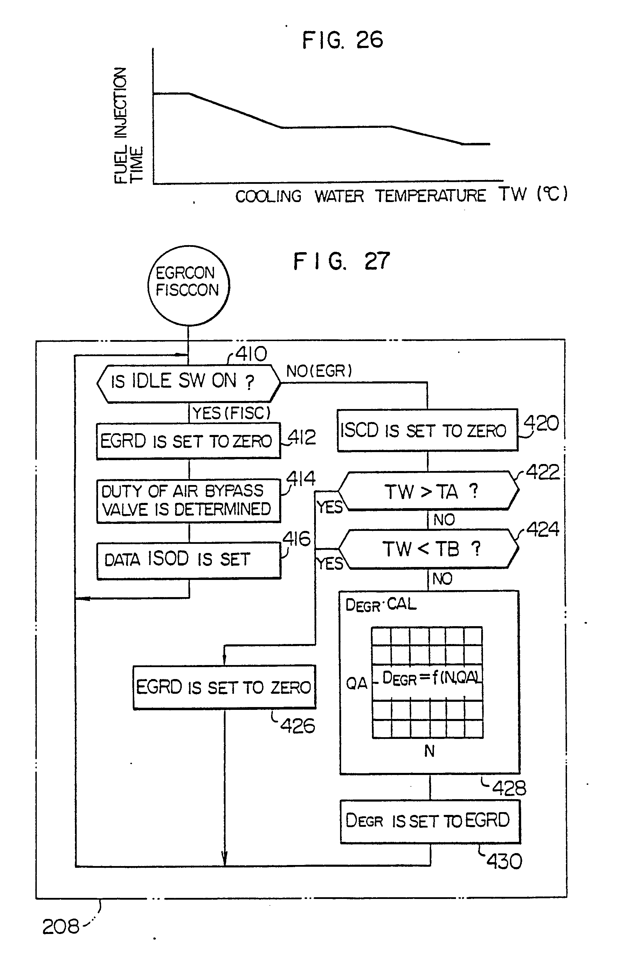

Fig. 25 is a flow chart illustrating details of an initialization program (INITIALIZ);

Fig. 26 graphically shows the fuel supply characteristic for the engine starting operation;

Fig. 27 is a flow chart illustrating details of a program of level "0";

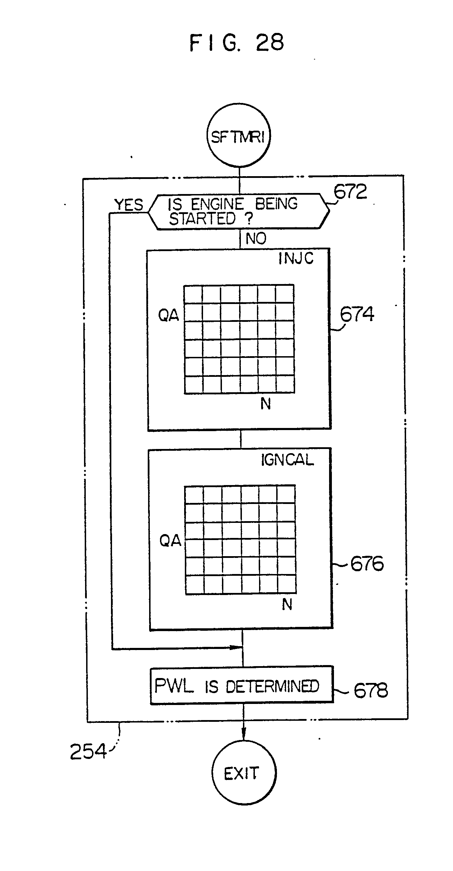

Fig. 28 is a flow chart illustrating details of a program of level "1";

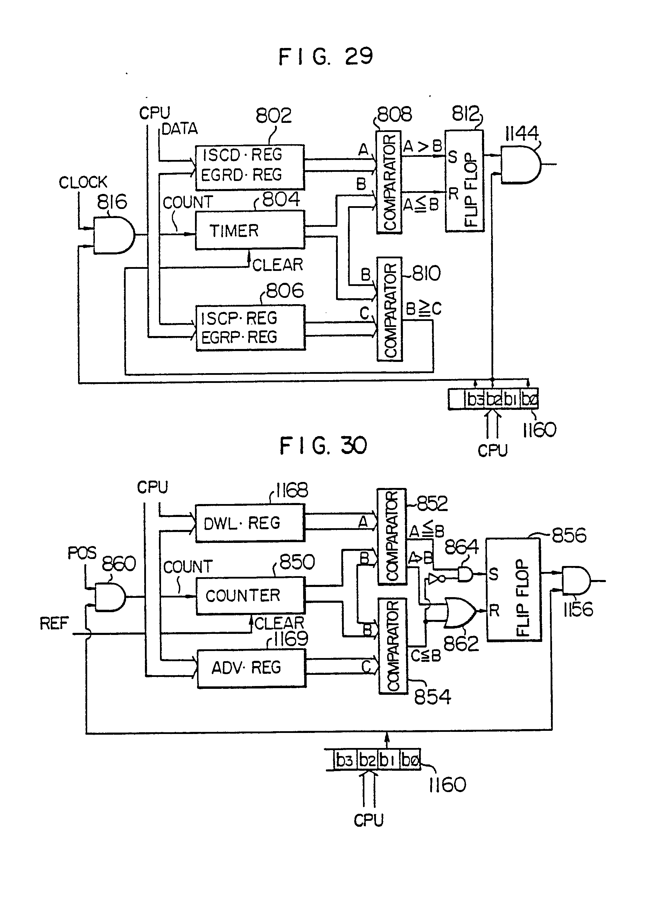

Fig. 29 is a block diagram illustrating circuits associated with the register CABC 165 and the register FSC 176 shown in Fig. 4, and the register ISCC and the register EGRC shown in Fig. 24;

Fig. 30 is a block diagram showing a circuit associated with the registers IGNC 168, 1138 shown in Figs. 4 and 24, resp;

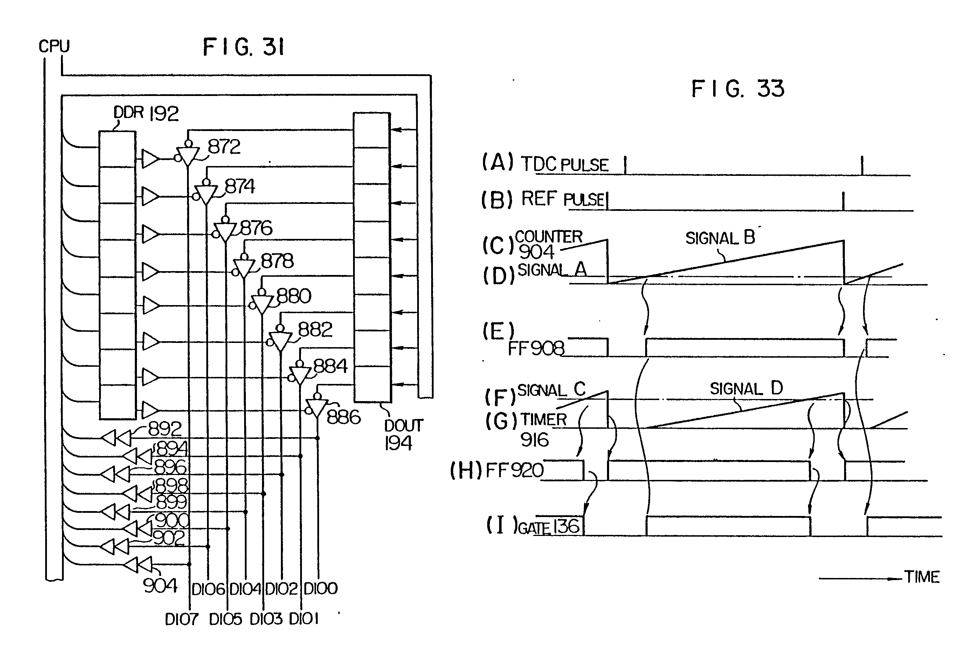

Fig. 31 is a circuit diagram showing in detail a circuit associated with a discrete input/output circuit DIO 128 shown in Figs. 4 and 24;

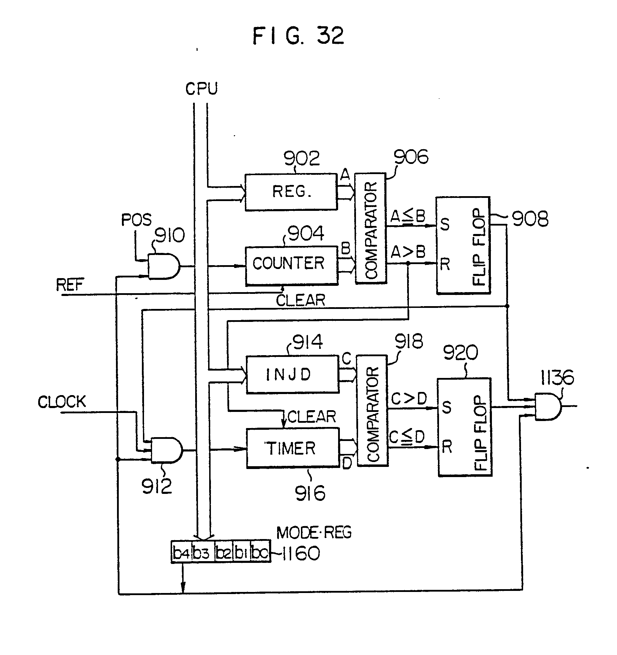

Fig. 32 is a circuit diagram showing in detail a circuit associated with the register INTD shown in Fig. 24, and

Fig. 33 is a signal waveform diagram illustrating the operation of the circuit shown in Fig. 32.

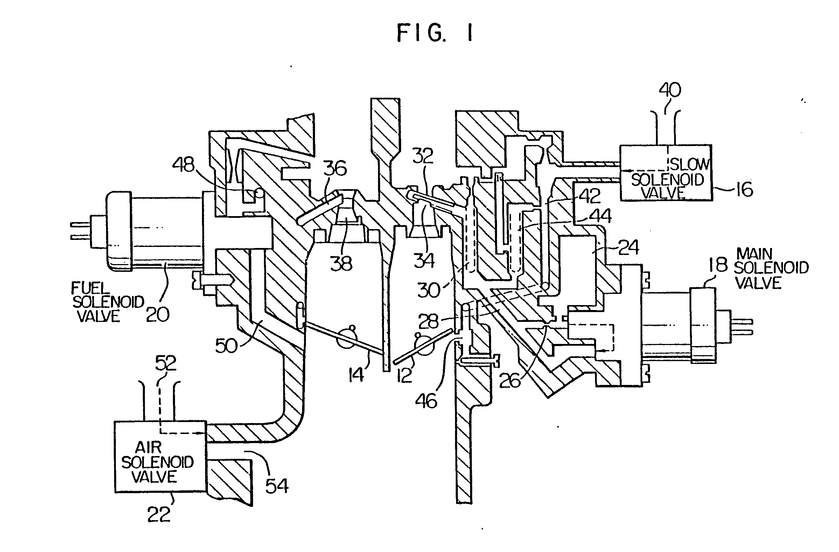

Now, the invention will be described in connection with a first exemplary embodiment thereof applied to an internal combustion engine provided with a carburettor with reference to Figs. 1 to 22.

Fig. 1 is a sectional view showing the throttle valve chamber of the carburettor. Various solenoid valves are provided around the throttle valve chamber for controlling the fuel quantity and the bypass air flow supplied to the throttle chamber, as will be described below.

The opening of the throttle valve 12 for low speed operation is controlled by the acceleration pedal (not shown), whereby air flow supplied from an air cleaner (not shown) to individual cylinders of the engine is controlled. When the air flow passing through a venturi 34 for low speed operation is increased as a result of the increased opening of the throttle valve 12, a throttle valve 14 for high speed operation is opened through a diaphragm device (not shown) in dependence on the negative pressure produced at the venturi for low speed operation, resulting in a decreased air flow resistance which would otherwise be increased due to the increased intake air flow.

The quantity of air flow fed to the engine cylinders under the control of the throttle valves 12 and 14 is detected by a negative pressure sensor (not shown) and converted into a corresponding analog signal. In

4

dependence on the analog signal thus produced as well as on other signals available from other sensors, which will be described hereinafter, the opening degrees of various solenoid valves 16, 18, 20 and 22, shown in Fig. 1, are controlled.

Then the control of the fuel supply will be described. The fuel fed from a fuel tank through a conduit 24 is introduced into a conduit 28 through a main jet orifice 26. Additionally, fuel is introduced to the conduit 28 through a main solenoid valve 18. Consequently, the fuel quantity fed to the conduit 28 is increased as the opening degree of the main solenoid valve 18 is increased. Fuel is then fed to a main emulsion tube 30 to be mixed with air and supplied to the Venturi 34 through a main nozzle 32. At the time when the throttle valve 14 for high speed operation is opened, fuel is additionally fed to a Venturi 38 through a nozzle 36. On the other hand, a slow solenoid valve (or idle solenoid valve) 16 is controlled simultaneously with the main solenoid valve 18, whereby air supplied from the air cleaner is introduced through an inlet port 40 into a conduit 42. Fuel fed to the conduit 28 is also supplied to the conduit or passage 42 through a slow emulsion tube 44. Consequently, as the quantity of air supplied through the slow solenoid valve 16 is increased the quantity of fuel supplied to the conduit 42 is decreased. The mixture of air and fuel produced in the conduit 42 is then supplied to the throttle valve chamber through an opening 46 which is also referred to as slow hole.

The fuel solenoid valve 20 serves to increase the fuel quantity for the starting and warming-up operations of the engine. Fuel introduced through a hole 48 communicating with the conduit 24 is fed to a conduit 50 communicating with the throttle valve chamber in dependence on the opening degree of the fuel solenoid valve 20.

The air solenoid valve 22 serves to control the air quantity supplied to the engine cylinder. To this end, the air solenoid valve 22 is supplied with air from the air cleaner through an opening 52, whereby air is introduced into a conduit 54 opening in the throttle valve chamber in a quantity corresponding to the opening degree of the air solenoid valve.

The slow solenoid valve 16 cooperates with the main solenoid valve 18 to control the fuel-air ratio, while the fuel solenoid valve 20 functions to increase the fuel quantity. Further, the engine speed at idle operation is controlled by means of cooperation of the slow solenoid valve 16, the main solenoid valve 18 and the air solenoid valve 22.

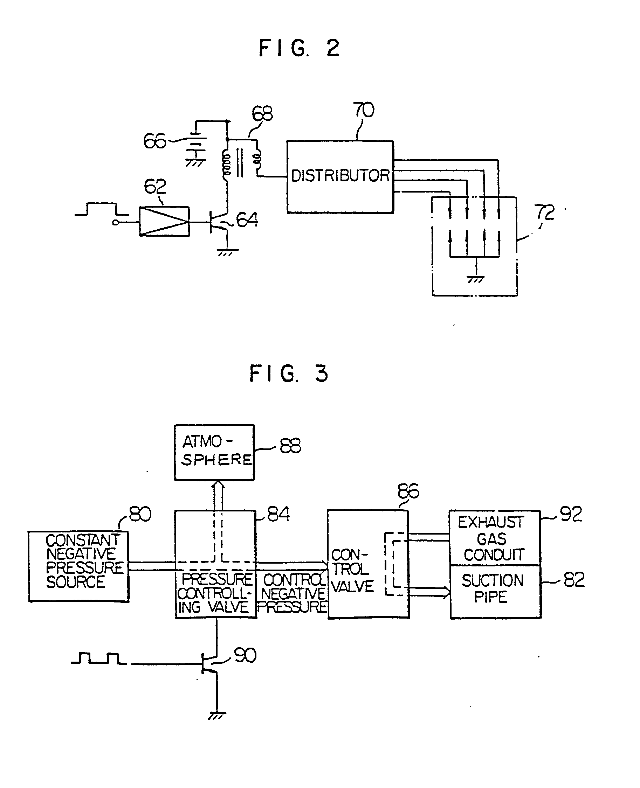

Fig. 2 shows schematically the arrangement of the ignition system with a pulse current being supplied to a power transistor 64 through an amplifier circuit 62, resulting in that the power transistor 64 is turned on (i.e. becomes conductive), whereby from the battery 66 a primary current is caused to flow through the primary winding of an ignition coil 68. In response to the trailing edge of the current pulse, the transistor 64 is turned off (i.e. is non-conductive or blocked), to give rise to the induction of a high voltage in the secondary winding of the ignition coil 68.

Through a distributor 70 in synchronism with the rotation of the engine the high voltage thus produced is then supplied to spark plugs 72 of the individual cylinders of the internal combustion engine.

Fig. 3 is a diagram to illustrate the operation of an exhaust gas recirculation system (hereinafter also shortly referred to as EGR system). A constant negative pressure derived from a constant negative pressure source 80 is applied to a control valve 86 through a constant-pressure valve i.e. pressure controlling valve 84 which serves to control the ratio at which the constant negative pressure from the negative pressure source 80 escapes to the atmosphere 88 in dependence on the duty cycle of a pulse signal applied to a transistor 90, thereby to control the negative pressure level applied to the control valve 86. In other words, the negative pressure applied to the control valve 86 is determined on the basis of the duty cycle of the transistor 90. On the other hand, the quantity of recirculated exhaust gas from an exhaust gas conduit 92 to an intake conduit 82 is controlled by the control of the negative pressure applied from the pressure controlling valve 84.

Fig. 4 shows in a schematic diagram the general arrangement of the whole control system. The control system includes a central processing unit (hereinafter referred to as CPU) 102, a read-only memory (hereinafter referred to as ROM) 104, a random access memory (hereinafter referred to as RAM) 106, and an input/output interface circuit 108. The CPU 102 performs arithmetic operations for input data from the input/output circuit 108 in accordance with various programs stored in ROM 104 and feeds the results of arithmetic operations back to the input/output circuit 108. Temporal data storage as required for executing the arithmetic operations is accomplished by use of the RAM 106. Various data transfer or exchange between the CPU 102, ROM 104, RAM 106 and the input/output circuit 108 are realized through a bus line 110 composed of a data bus, a control bus and an address bus.

The input/output interface circuit 108 includes input means comprising a first analog-to-digital converter 122 (hereinafter referred to as ADC1), a second analog-to-digital converter 124 (hereinafter referred to as ADC2), an angular signal processing circuit 126, and a discrete input/output circuit 128 (hereinafter referred to as DIO) for inputting or outputting a single-bit information.

The ADC1 122 includes a multiplexer 162 (hereinafter referred to as MPX) which has the input terminals applied with output signals from a battery voltage detecting sensor 132 (hereinafter referred to as VBS), a sensor 134 for detecting the temperature of cooling water (hereinafter referred to as TWS), an ambient temperature sensor 136 (hereinafter referred to as TAS), a voltage-regulating generator 138 (hereinafter referred to as VRS), a sensor 140 for detecting a throttle angle (hereinafter referred to as θTHS) and a λ-sensor 142 (hereinafter referred to as λS). The multiplier or MPX 162 selects one of the input signals to

**0 017 219**

supply it to an analog-to-digital converter circuit 164 (hereinafter referred to as ADC). A digital signal output from the ADC 164 is held by a register 166 (hereinafter referred to as REG).

The output signal from a negative pressure sensor 144 (hereinafter referred to as VCS) is supplied to the input of the ADC2 124 to be converted into a digital signal through an analog-to-digital converter circuit 172 (hereinafter referred to as ADC). The digital signal output from the ADC 172 is set in a register 174 (hereinafter referred to as REG).

An angle sensor 146 (hereinafter termed ANGS) is adapted to produce a signal representative of a standard or reference crank angle, e.g. of 180° (the signal being hereinafter termed REF signal) and a signal representative of a minute crank angle (e.g. 1°) the signal being hereinafter referred to as POS signal). Both of the signals REF and POS are applied to the angular signal processing circuit 126 to be shaped.

The discrete input/output circuit or DIO 128 inputs to an idle switch 148 (hereinafter referred to as IDLE-SW), a top-gear switch 150 (hereinafter termed TOP-SW) and a starter switch 152 (hereinafter referred to as START-SW).

In the following, a pulse output circuit as well as objects or functions to be controlled on the basis of the results of arithmetic operations executed by the CPU 102 are described. A fuel-air ratio control device 165 (hereinafter referred to as CABC) serves to vary the duty cycle of a pulse signal supplied to the slow solenoid valve 16 and the main solenoid valve 18 for controlling them. Since an increase in the duty cycle of the pulse signal through the control by the CABC 165 is to involve a decrease in the fuel supply quantity through the main solenoid valve 18, the output signal from the CABC is applied to the main solenoid valve 18 through an inverter 163. On the other hand, the fuel supply quantity controlled through the slow solenoid valve 16 is increased, as the duty cycle of the pulse signal produced by the CABC 165 is increased. The CABC 165 includes a register (hereinafter referred to as CABP) for setting therein the pulse repetition period of the pulse signal described above, and a register (hereinafter referred to as CABD) for setting therein the duty cycle of the same pulse signal. Data for the pulse repetition period and the duty cycle to be loaded in the registers CABP and CABD are available from the CPU 102.

An ignition pulse generator circuit 168 (hereinafter referred to as IGNC) is provided with a register (hereinafter referred to as ADV) for setting therein ignition timing data, and a register (hereinafter referred to as DWL) for controlling the duration of the primary current flowing through the ignition coil. Data for these controls are available from the CPU 102. The output pulse from the IGNC 168 is applied to the ignition system denoted by 170 in Fig. 4. The ignition system 170 is implemented in an arrangement as described hereinbefore with reference to Fig. 2. Accordingly, the output pulse from the IGNC 168 is applied to the input of the amplifier circuit 62 shown in Fig. 2.

A fuel increasing pulse generator circuit 176 (hereinafter referred to as FSC) serves to control the duty cycle of a pulse signal applied to the fuel solenoid valve 20 shown in Fig. 1 for the control thereof and includes a register for setting therein the pulse repetition period of the pulse signal (the register being hereinafter referred to as FSCP) and a register (hereinafter referred to as FSCD) for setting the duty cycle of said pulse signal.

A pulse generator circuit 178 (hereinafter referred to as EGRC) for producing a pulse signal to control the quantity of exhaust gas to be recirculated (EGR) includes a register (hereinafter termed EGRP) for setting the pulse repetition period, and a register (hereinafter termed EGRD) for setting the duty cycle of the pulse signal supplied to the air solenoid valve 22 through an AND gate 184 having the other input supplied with the output signal DIO1 from the DIO128. More specifically, when the signal DIO1 is at a level "L", the AND gate 184 is enabled to conduct therethrough the control pulse signal for controlling the air solenoid valve 22.

On the other hand, when the signal DIO1 is at level "H", an AND gate 186 is made conductive to control the EGR system 188, a fundamental construction of which is illustrated in Fig. 3.

The DIO 128 is an input/output circuit for a single bit signal as described hereinbefore including to this end a register 192 (hereinafter referred to as DDR) for holding data to determine the output or input operations, and a register 194 (hereinafter referred to as DOUT) for holding data to be outputted. The DIO 128 produces an output signal DIO0 for controlling the fuel pump 190.

Fig. 5 shows a program system for the control circuit shown in Fig. 4. When a power supply source is turned on by a key switch (not shown), the CPU 102 is set in a start mode to execute an initialization program (INITIALIZ) 204. Subsequently, a monitor program (MONIT) 206 is executed, which is followed by the execution of a background job (BACKGROUND JOB) 208. The background jobs include, for example, the task for calculating the quantity of EGR (hereinafter referred to as EGR CAL. task), and the task for calculating the control quantities for the fuel solenoid valve 20 and the air solenoid valve 22 (hereinafter referred to as FISC). When an interrupt request (hereinafter termed IRQ) appears during the execution of these tasks, an IRQ analyzing program 224 (hereinafter termed IRQ ANAL) is executed from the start step 222. The program IRQ ANAL constitutes an end interrupt processing program 226 for the ADC1 (hereinafter referred to as ADC1 END IRQ), an end interrupt processing program 228 for the ADC2 (hereinafter referred to as ADC2 END IRQ), an interval interrupt processing program 230 (hereinafter referred to as INTV IRQ), and an engine stop interrupt processing program 232 (hereinafter referred to as ENST IRQ) and issues activation requests (hereinafter referred to as QUEUE) to the tasks to be activated among those described below.

The tasks to which the request QUEUE is issued from the subprograms ADC1 END IRQ 226, ADC2 END

6

IRQ 228 and INTV IRQ 230 of the program IRQ ANAL 224 are a task group 252 of level "0", a task group 254 of level "1", a task group 256 of level "2" or a task group 258 of level "3" or alternatively given individual tasks which constitute parts of these task groups. The task to which the request QUEUE is issued from the program ENST IRQ 232 is a task program 262 for processing the stopping of the engine (the task being hereinafter referred to as ENST TASK). When the task program ENST TASK 262 has been executed, the control program is set back to the start mode and the starting step 202 is regained.

A task scheduler 242 serves to determine the sequence in which the task groups are to be executed such that the task groups to which the request QUEUE is issued, for which the execution is interrupted, are to be executed starting with the task group having the highest priority level. In the case of the illustrated example, it is assumed that the level "0" is the highest priority level. Upon the completed execution of a task of the task group having the highest priority level, a termination indicating program 260 (hereinafter referred to as EXIT) is executed to inform the task scheduler 242. Subsequently, the task group of the following priority level among those in queue is executed and so on.

When there does not remain a task group the task execution thereof was interrupted, or to which the request QUEUE was issued, the execution of the background jobs 208 is regained under the command of the task scheduler 242. Further, when IRQ is issued during the execution of a task of the task group among those of level "0" to "3", the starting step 202 of the IRQ processing program is regained.

Initiations and functions of the individual task programs are enlisted in Table 1.

# 0 017 219

TABLE 1

| Level | Identification of programs | Functions | Activation (Timing) |
|---|---|---|---|
| — | IRQ ANAL | Analysis of IRQ and issue of requests for activating task groups or tasks | IRQ |
| — | TASK SCHEDULER | Determination of task groups or tasks to be executed | End of IRQ ANAL or end of EXIT |
| — | EXIT | Information on performed executions of task groups | End of individual task groups |
| 0 | AD1IN | Fetching of output from ADC1 | INTV IRQ (10ms) or ADC1END |
| 0 | AD1ST | Initiation of ADC1 | INTV IRQ (10ms) |
| 0 | AD2IN | Fetching of output from ADC2 | INTV IRQ (10ms) or ADC1 END |
| 0 | AD2ST | Initiation of ADC2 | INTV IRQ (10ms) |
| 0 | RPMIN | Fetching of engine speed | INTV IRQ (10ms) |
| 1 | CARBC | Calculation of the duty cycle for controlling the fuel-air ratio | INTV IRQ (20ms) |
| 1 | IGNCAL | Calculation of ignition timing | INTV IRQ (20ms) |
| 1 | DWLCAL | Calculation of the duration of the primary current through the ignition coil | INTV IRQ (20ms) |
| 2 | LAMBDA | Control of $\lambda$ | INTV IRQ (40ms) |
| 3 | HOSEI | Calculation of corrections | INTV IRQ (100ms) |
| — | FISC | Calculation for positioning fuel valve and air valve | BACKGROUND JOB |
| — | EGRCAL | Calculation for positioning the negative-pressure-controlled valve for EGR | BACKGROUND JOB |
| — | INTLIZ | Setting initial values at the input/output circuit | START or RE-START |
| — | MONIT | Monitoring of the START-SW and starting of the fuel pump | START or RE-START |
| — | ENST TASK | Stop of the fuel pump and resetting of IGN | ENST IRQ |

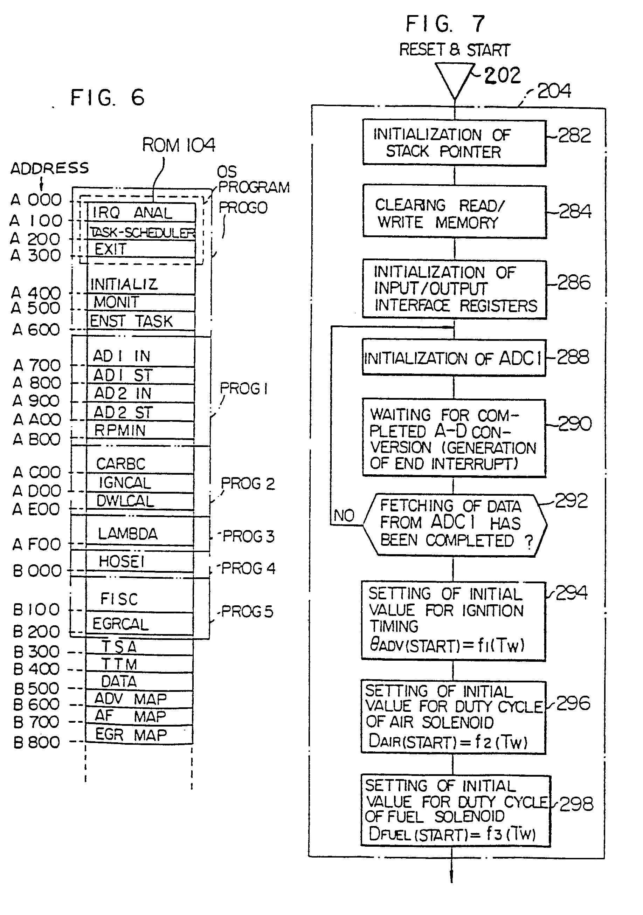

As can be seen from the above Table 1, there are programs for monitoring or supervising the control system illustrated in Fig. 5 such as the programs IRQ ANAL, TASK SCHEDULER and EXIT. These programs are held in ROM 104 at addresses A000 to A2FF, as is illustrated in Fig. 6.

The programs of level "0", are AD1ST, AD2IN, AD2ST and RPMIN which are activated usually by INTV IRQ produced for every 10 ms. The programs of level "1" include CARBC, IGNCAL and DWLCAL programs which are activated for every INTV IRQ produced periodically at a time interval of 20 ms. The program of level "2", is LAMBDA which is activated by the INTV IRQ for every 40 ms. The program of level "3" is HOSEI which is activated by INTV IRQ for every 100 ms. The programs EGRCAL and FISC are provided for the background jobs. The programs of level "0" are stored in ROM 104 at addresses A700 to AAFF as PROG1, as is shown in Fig. 6. The level "1" programs are stored in ROM 104 at addresses ABOO to ABFF as PROG2. The level "2" programs are stored in ROM 104 at addresses AEOO to AEFF as PROG3. The program of level

8

"3" is stored in ROM 104 at addresses AF00 to AFFF as PROG4. The program for the background jobs is held at B000 to B1FF. A list (hereinafter referred to as SFTMR) of the start address of the programs PROG1 to PROG4 described above is stored at addresses B200 to B2FF, while values representative for the activation periods of the individual programs (hereinafter referred to as TTM) are stored at addresses B300 to B3FF.

Other required data are stored in ROM 104 at addresses B400 to B4FF, as is illustrated in Fig. 6. In succession thereto, data ADV MAP, AF MAP and EGR MAP are stored at B500 to B7FF.

The program INITIALIZ shown at 204 in Fig. 5 will be described in detail with reference to Fig. 7. At a step 282, a standby area is set upon issuing of IRQ. Next, at a step 284, RAM 106 is wholly cleared. At a step 286, the registers of the input/output circuit 108 are initialized (i.e. loaded with initial values). This initialization step includes setting of the number of engine cylinders, initial value of the angle sensor, setting of DDR of the DIO 128, setting of a timer for issuing INTV IRQ, setting of a detection period for issuing of ENST IRQ, and setting of a measuring time for detecting the revolution number of the engine.

At a step 288, ADC1 is triggered, while the inhibition of END IRQ for ADC1 is removed. In this case, jump is made to the address A700 shown in Fig. 6 which is the start address of the program AD1ST. As a consequence, the output signal from VBS (battery voltage detecting sensor) 132, which constitutes one of the inputs to MPX 162 of the ADC1 122 shown in Fig. 4 is selected and applied to the input of the ADC 164. At a step 290, the issue of END IRQ for ADC 164 is waited for. When the digital value output from ADC164 upon the completed operation thereof is loaded into REG 166, the status register STATUS 198 is informed on the termination of the operation of ADC 164 and ADC1 END IRQ is transferred to the CPU 102. As a consequence, the program AD1 IN is executed, whereby the output from the battery voltage detecting sensor 132 is fetched or sampled.

At a step 292, it is ascertained, whether or not all the output values from the sensors 132 to 142 have been fetched. If only the fetching of the output signal from the sensor 132 has been completed, in this case the routine is returned to the step 288, at which the program AD1ST is again started, whereby the MPX 162 selects the output from the sensor 134 as a next input thereto. Upon completion of the analog-to-digital conversion of the output signal from the sensor 134, the program AD1IN (fetching) is executed at a step 292, whereby the digital value representative of the output from the TWS 134 (temperature sensor for cooling water) held in the register or REG 166 is read out and stored at the DATA area. At a step 292, the routine is returned to the step 288. In this manner, through repetitive execution of the steps 288 to 292 in a looped routine, the digital values representing the outputs from the sensors 132 to 142, respectively, are successively fetched. When the output value of the λ-sensor 142 has been fetched, the program proceeds to a step 294.

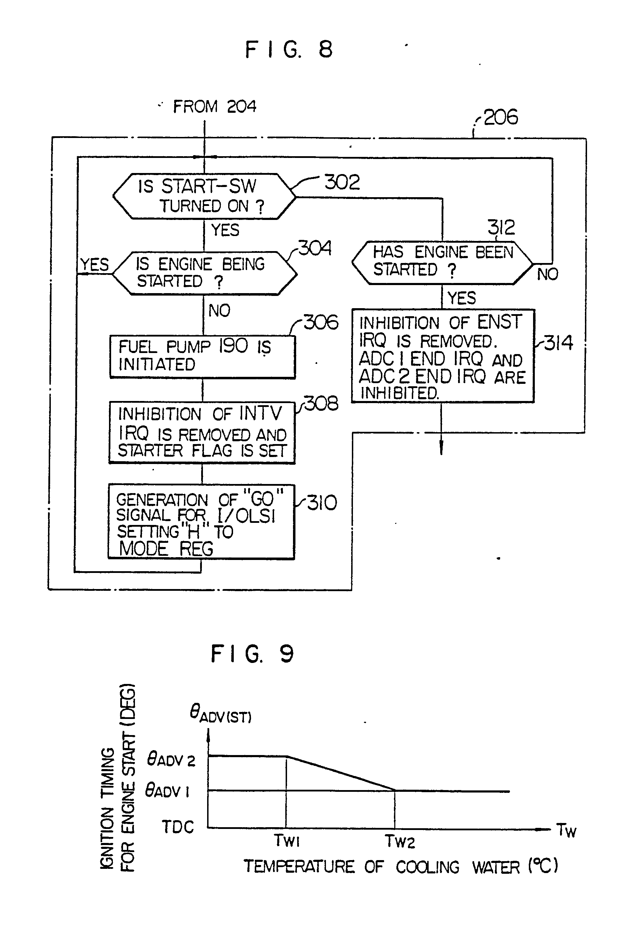

At the step 294, the ignition timing for starting the engine is arithmetically determined. To this end, the ignition timing θADV(ST) is arithmetically determined as a function of the temperature TW of the cooling water of the engine. The relationship between the ignition timing for starting the engine and the cooling water temperature is graphically illustrated in Fig. 9. In accordance with the characteristic relationship illustrated in Fig. 9, the ignition timing ADV(ST) is arithmetically determined. The results as obtained are loaded in the register ADV of IGNC 168 shown in Fig. 4.

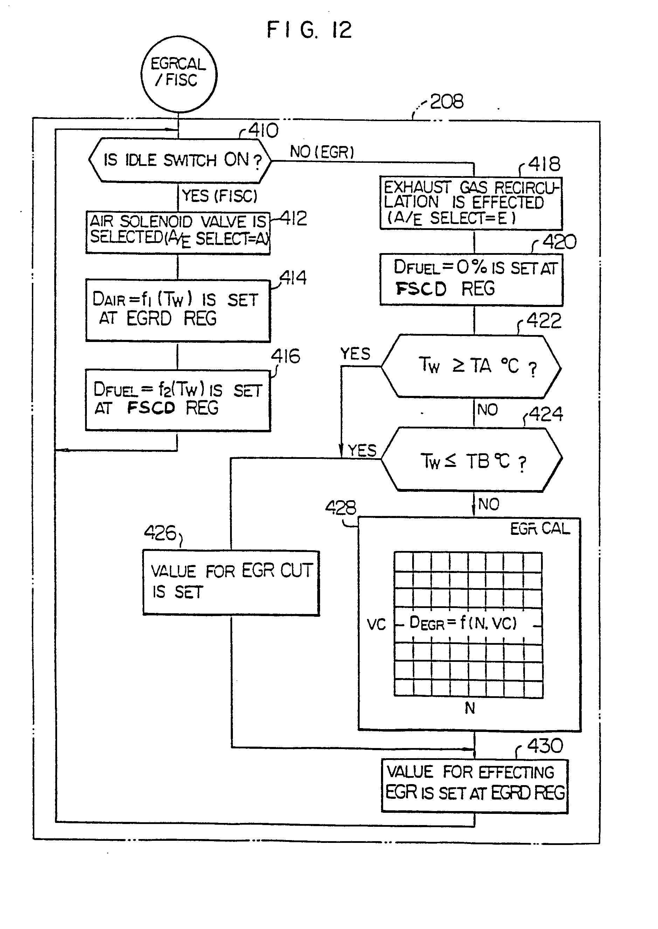

At a step 296, the opening degree of the air solenoid valve 22 for starting the engine is arithmetically determined as a function of the temperature of cooling water, as is graphically illustrated in Fig. 11. The results of the executed arithmetic operation are placed into the register EGRD. A fixed value for the opening degree of the air solenoid valve is set at the register EGRP. In Fig. 11, the valve opening degree of the air solenoid valve 22 for starting the engine is taken along the ordinate in terms of the ratio to the fixed value stored in EGRP.

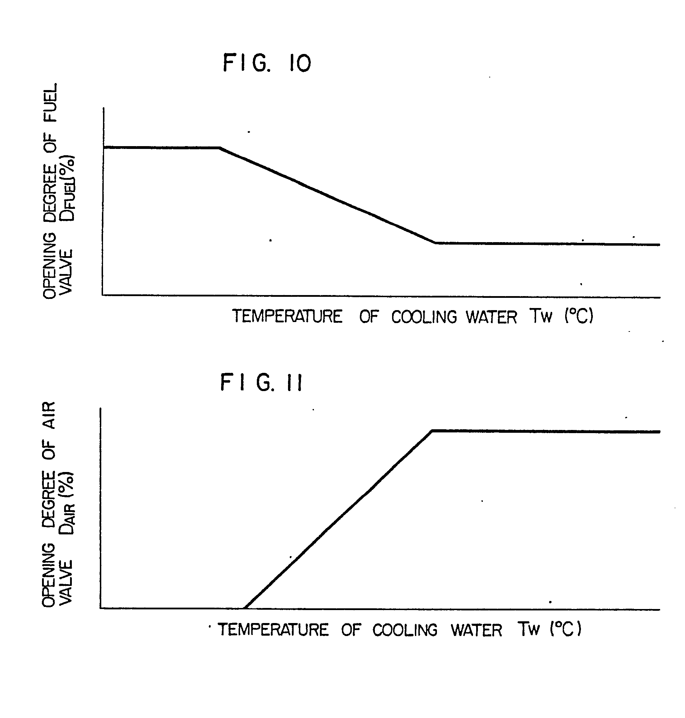

At a step 298, the initial value for the duty factor of the fuel solenoid valve 20 is arithmetically determined on the basis of a relationship to the temperature of cooling water which relationship is graphically illustrated in Fig. 10 in terms of the ratio of the value set at the register FSCD to the valve set at the register ESCP. When data is placed into the registers FSCP and FSCD, the execution of the program INITIALIZ 204 in Fig. 5 has been completed, which is then followed by the execution of the MONIT program 206 illustrated in Fig. 8.

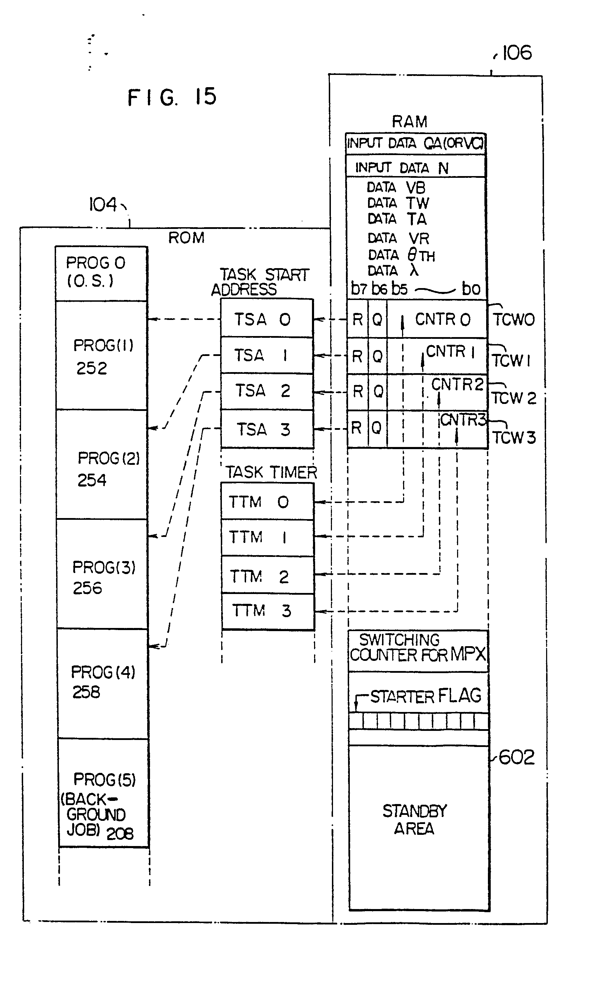

The program MONIT 206 is started from a step 302 at which it is checked whether or not the start switch 152 shown in Fig. 4 is closed by monitoring the input of DIO5 of DIO 128. When the start switch 152 is in the closed or ON-state, the fifth bit DIO5 in the register DIO 128 is at the level "H". On the other hand, when the start switch 152 is opened, the same bit is at the level "L". Assuming that the starter motor is not yet energized, the start switch 152 is opened. Consequently, the MONIT program proceeds from the step 302 to the step 312 at which it is determined whether the starter motor is in operation by checking whether or not a starter flag is set. This starter flag is stored in RAM 100 at a predetermined location, as is illustrated in Fig. 15 and set at a step 308. Since the starter flag is not set before the initiation of the starter motor, the result of the decision step 312 at this time is negative or "NO", whereby the program returns again to the step 302. In this manner, the execution of the program circulates between the steps 302 and 312 as long as the start switch 152 remains opened, while the state of the start switch is simultaneously monitored.

When the start switch 152 is turned on or closed, the result of the decision step 302 is affirmative or "YES". The program then proceeds to a step 304 at which it is decided whether the initiation of the engine has been started. Since at first the decision step 304 immediately follows the detection of the closed state of the start switch, the decision at the step 204 results in "NO". The decision at the step 304 is made also by checking whether or not the starter flag is set. When the starter flag is not yet set, a step 306 is executed for preparing for the initiation of the engine. For example, in case of the embodiment described, the zeroth bit in the register DOUT 194 of DIO 128 is set at level "H" for initiating the operation of the fuel pump 190, as a result of which the fuel pump is electrically energized. Subsequently, the first bit in the register DOUT 194 is set to the level "L", resulting in that the air solenoid valve 22 is controlled by the output signal from the EGRC circuit 178. In practice, the setting of the zeroth and the first bits in the register DOUT 194 is effected simultaneously.

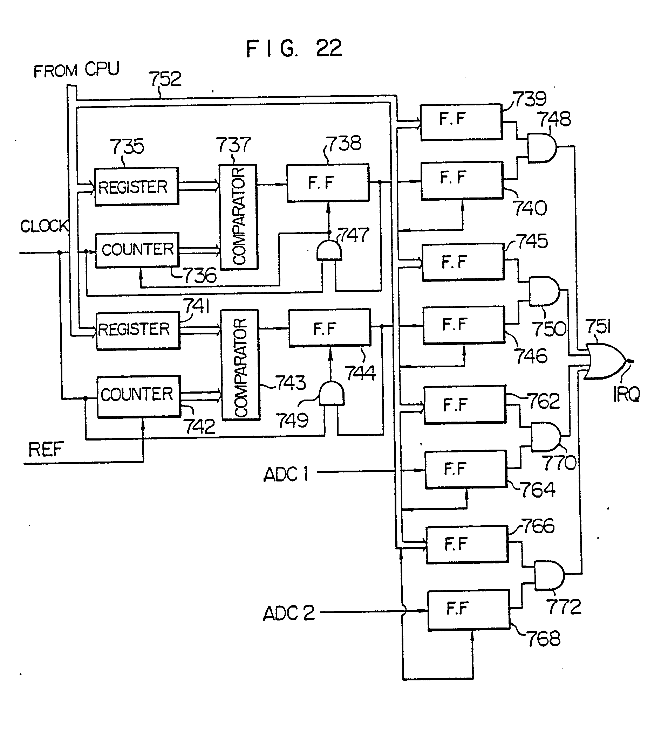

At a step 308, the inhibition of INTV IRQ is removed with the ignition being also released from the inhibition. The removal of the inhibition of INTV IRQ may be effected by setting the fourth bit (the flip-flop 739 in Fig. 22) in the register MASK 200 shown in Fig. 4 for example to the level "H". Further, at the step 308, the starter flag is set. This flag indicates that the start switch is in the closed state which is used in the decisions at steps 304 and 312 described above.

At a step 310 the bit "H" is set in a mode register described hereinafter for initiating the operations of CABC 162, IGNC 168, FSC 176 and EGRC 178 constituting output parts of the input/output circuit 108 (generation of the signal "GO"). As a consequence, output pulse signals are supplied to the associated control devices. The program then returns from the step 310 to the step 302, and it is decided at the step 302 whether the start switch 152 is in the closed state. Since the start switch is closed in the engine starting mode, the result of the decision at the step 302 is affirmative or "YES". The program will then proceed to the step 304, at which the starter flag is checked. If the starter flag is set, it is decided that the engine is being started. The program then returns to the step 302.

As long as the starter motor is driven, the program is repeated in this manner in a loop between the "YES" outputs of the steps 302 and 304.

When the engine has been started, the start switch 152 is turned off. The result of the decision step 302 is thus negative "NO". Then the program proceeds to the step 312, at which the starter flag is checked. Since the starter flag is set, the program proceeds to the step 314 at which ENST IRQ is released from being inhibited. Upon execution of the step 314, the stop of the engine is detected by the ENST IRQ.

Then the program 208 of the background jobs is executed, which is illustrated in detail in Fig. 12.

Referring to Fig. 12, it is decided at a step 410 whether or not the idle switch 148 is closed or "ON". If the answer is "YES", the recirculation of exhaust gas is not carried out.

Consequently, the program proceeds to a step 412 in which the air solenoid valve 22 is selected by setting the first bit in the register DOUT 194 of DIO to the level "L". Accordingly, the air solenoid valve 22 shown in Fig. 1 is controlled in accordance with the value set at the register EGRD. The air solenoid valve 22 serving to control the air flow through the bypass passage is controlled in specific operation conditions. More particularly, in case of operations such as low ambient temperatures for example in winter, cold starting of the engine, operation under large load due to the use of a car air-conditioner or the like, the air flow through the bypass passage is increased. At a step 414, the duty factor of the air solenoid valve 22 is set at the register EGRD in dependence on the temperature TW of the cooling water of the engine. Further, at step 416 the fuel supply quantity controlled by the solenoid fuel valve 20 is set at the register FSCD in dependence on the cooling water temperature TW. The fuel solenoid valve 20 and air solenoid valve 22 are controlled in accordance with the respective set values thereby to control the engine operation in the idling mode. When the execution of the step 416 has been terminated, the program proceeds again to the step 410 to repeat the routine process described above.

On the other hand, when the idle switch 148 is in the open state, the air solenoid valve 22 is not controlled, while the recirculation of exhaust gas is effected. To this end, the EGR system for controlling the exhaust gas recirculation quantity is driven. For driving the EGR system 188 by using the value set in the register EGRD, the first bit in the register DOUT 194 of DIO is set to the level "H" at a step 418. At a next step 420, the register ESCD is set to zero, to thereby inhibit the operation of the fuel solenoid valve 20. At a step 422, it is checked whether the cooling water temperature is higher than a predetermined value such as TA°C, for example. If the answer is affirmative, EGR operation is inhibited or cut. For this reason, a value for effecting EGR CUT is set at a step 426. When the cooling water temperature is found to be at or lower than the predetermined value (TA °C), the program proceeds to the step 424 where it is decided whether the temperature of cooling water is lower than a predetermined value TB °C. If so, then EGR operation is inhibited. To this end, a value for EGR CUT is set at a step 426. These values are placed into the register EGRD at a step 430.

EGR operation takes place when the temperature TW of the cooling water is higher than TB °C and lower than TA °C. The EGR quantity, i.e. the recirculated quantity of exhaust gas is determined on the basis of the output signal VC from the negative pressure sensor 144 and the revolution number N of the engine. A map of EGR quantity in dependence on the sensor output VC and the revolution number N is provided to the ROM 104 at the addresses B700 to B7FF, as is shown in Fig. 6. The EGR quantity is determined from this map through searching retrieval performed at a step 428. The retrieved value is then placed into the register EGRD at a step 430. The EGR system 188 illustrated in Fig. 4 is driven in accordance with the value set at the register EGRD.

In case of the program shown in the flow chart of Fig. 12, the step 410 is regained upon the completed execution of the steps 430 or 416. In this manner, the computer is able to always execute the routine extending from the step 410 to the step 416 or the routine extending from the step 418 to the step 430 for controlling the air solenoid valve 22. In this manner, unless any IRQ are issued, the program started at the entry 202 will continue to be executed in the order of programs INITIALIZ 204, MONIT 206, and FISC or EGR 208 which are the background jobs.

The execution of the program MONIT 206 as well as the program 208 for the background jobs (FISC or EGR) can be interrupted by issuing an interrupt request or IRQ. When the processing commanded by IRQ has been completed, the execution of the interrupted program is regained.

Now, referring to Fig. 5, processings due to the issue or generation of IRQ will be described. The program 224 for analyzing the causes of IRQ comprises subprograms for the processing of ADC1 END IRQ 226, the processing of ADC2 END IRQ 228, the processing of INTV IRQ 230 and the processing ENST IRQ 232. For executing these subprograms 226, 228, 230 and 232, respectively, the content of the associated IRQ as issued is to be examined at first. To this end, the content in the STATUS register 198 shown in Fig. 4 is examined for determining the cause of the IRQ having been issued. In accordance with the cause giving rise to the generation of the IRQ concerned, the subprograms 226, 228, 230 or 232 are executed, as a result of which the activation request QUEUE is issued to the TASK required to be executed among the TASKS 252, 254, 256, 258, and 262.

In this connection, it should be mentioned that if too many IRQ's are allowed to be generated, sufficient time is required for executing the supervisory program (hereinafter referred to as OS program), resulting in that time available for arithmetic operations for the engine control is eventually reduced or restricted. Accordingly, in case of the described embodiment it is assumed that ADC2 END IRQ 228 is allowed to be generated only during the execution of the subprograms 204 or 206 (INITIALIZ or MONIT) and in otherwise inhibited. More specifically, at the step 314 of the MONIT program 206 shown in Fig. 8, an inhibit command i.e. "L" for ADC2 END IRQ is set at the MASK register 200 (the flip-flop 766 in Fig. 22) shown in Fig. 4. ADC1 END IRQ 226 is originally inhibited. More specifically, at the start step 202, the MASK register is set by the general rest signal for the input/output circuit so that all interrupt requests are inhibited. The ADC1 END IRQ is caused to remain inhibited by preventing the inhibition removing command from being issued.

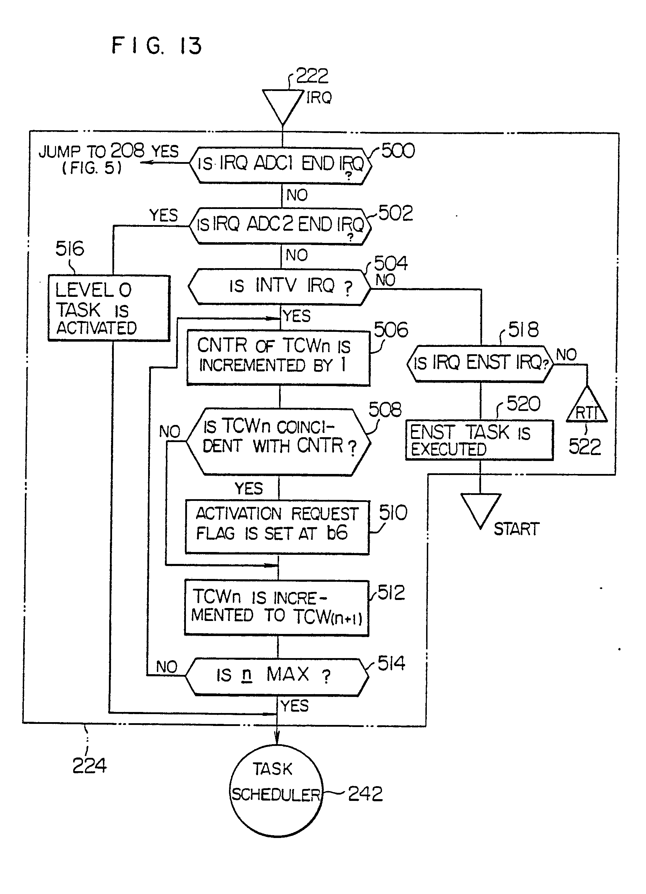

An example of the program 224 is illustrated in Fig. 13. This program starts from an entry step 222 and, when it is detected at a step 500 that the ADC1 END IRQ is not produced, proceeds to a step 502 at which is decided that the IRQ as issued is or is not the ADC2 END IRQ. If affirmative ("YES"), an activation request is issued to the program of the task level "0" at a step 516. This can be accomplished by setting a flag of "1" at b6 of a task control word TCWO in the RAM 106 shown in Fig. 15. The program then proceeds to the TASK SCHEDULER 242. In case of the embodiment now described, it is assumed that the ADC2 END IRQ is allowed to be generated only during the execution of the INITIALIZ program 204 shown in Fig. 5 and otherwise inhibited. When the decision at the step 502 leads to "NO", the program proceeds to the step 504 at which it is decided whether the IRQ being issued is the INTV IRQ generated at a predetermined constant time interval or period. If affirmative or "YES", the program proceeds to a step 506. At steps 506 to 514, the INTV IRQ is examined in connection with the timing for activating the programs of the task level "0" to the task level "3". At first, an examination is made as to the program of the task level "0". More specifically, the task control word of the task level "0" i.e. the counter 0 including bits b0 to b5 of TCW 0 shown in Fig. 15 is incremented by "1". In this connection, it should be noted that although upcounting is adopted in case of the shown embodiment, a down-counting or decrementing may of course be adopted. At step 508, the content of the counter 0 of TCW 0 is compared with that of the task activating timer TTMO shown in Fig. 15. Herein, the presence of "1" in TTMO means that the program of the task level "0" (denoted by 252 in Fig. 5) is activated for every 10 m·s., since it is assumed that the INTV IRQ is generated at a period or time interval of 10 m·s. At step 508, the content of the counter CNTRO and the task timer TTMO is compared with each other. When they coincidence (i.e. "YES"), the program proceeds to step 510 at which a flag "1" is set at b6 of the task control word TCWO. In case of the shown embodiment, the bits b6 of every TCW represent the flags for requesting the activation of the associated tasks. The bit positions b0 to b5 of the counter CNTRO are all cleared, because the flag of "1" is set at b6 of TCWO at the step 510.

At the step 512, the retrieval of the activation timing for the program of task level "1" is effected. At a step 514, it is decided whether the task of level "3" has been ended, i.e., if n=4. In this case since n=1, the program returns to the step 506 at which the content of the counter CNTR1 of TCWI in RAM 106 shown in Fig. 15 which is the task control word for the program of task level "1" is incremented by "+1". At step 508, the incremented contents is compared with the content of TTM1 of the ROM 104 shown in Fig. 15. In case of the shown embodiment, it is assumed that the content of TTM1 is equal to "2". In other words, the timing period for activating the program of the task level "1" is 20 ms. Assuming now that the content of the counter CNTR1 is equal to "1", the result of the decision at step 508 is "NO", which means that this is not an activation timing for the program 254 of the task level "1". Thus, the program proceeds to step 512 at which the task level of the program to be retrieved is updated again to the task level "2". In a similar manner, processings are made up to the level "3", whereupon n becomes equal to 4 at step 512. Thus the conditions n=MAX are fulfilled at step 514. The processing is then transferred to the task scheduler 242.

When no INTV IRQ is found at step 504, the program proceeds to a step 518 at which is decided that the IRQ in question is ENST IRQ. When the decision made at the step 504 leads to "NO", the IRQ must necessarily be ENST IRQ. Accordingly, step 518 may be omitted and the program may proceed directly to step 520 at which the fuel pump is stopped in accordance with a specific program based on the stop of the engine. Additionally, all output signals for the ignition system and the fuel supply control system are reset. The program then returns to the start step 202 shown in Fig. 5.

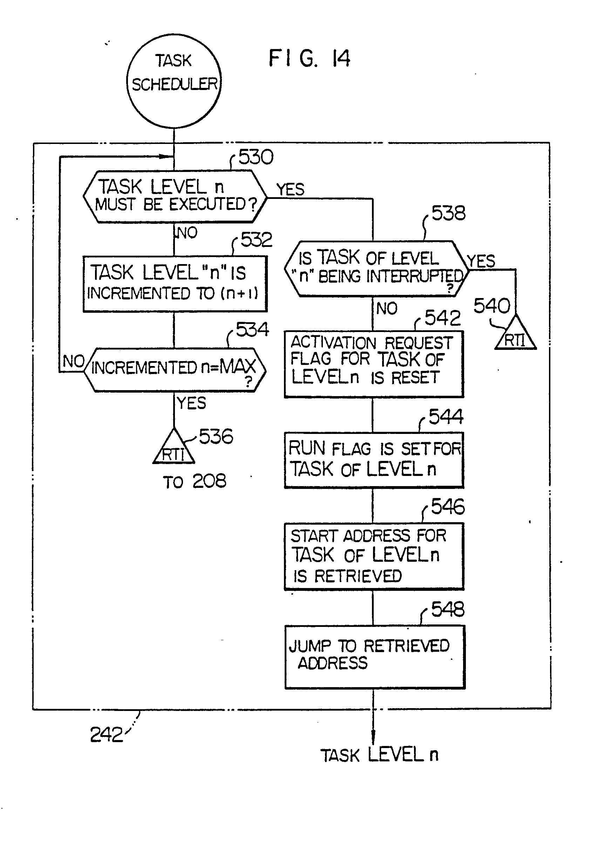

Fig. 14 shows in a flow chart a program for the task scheduler 242 in detail. At a step 530, is decided whether the task of the task level "n" is to be executed. At first, n=0. Accordingly, it is decided on the necessity of an execution of the task of level "0". In other words, the presence of a task activation request is examined in the order of high to low priority levels. Such examination can be made through an retrieval of bits from b6 and b7 of the respective task control words. Bit position b6 is allotted to the activation request flag. When "1" is present at this position b6, it is determined that the activation request is present. Further, b7 is allotted to the flag indicating that the associated task is under execution. The presence of "1" at b7 indicates that the associated task is under execution and is now being interrupted. Accordingly, when "1" is present at least one of b6 and b7, the scheduler program proceeds to step 538.

At the step 538, the flag set at b7 is checked. The presence of "1" at b7 means that the execution is interrupted. At a step 540, the execution being interrupted until then is regained. Flag set at both b6 and 7b causes the decision at step 538 to be affirmative or "YES", whereby the task program being interrupted is re-initiated. In case "1" is present only at b6, the activation request flag of the task of the corresponding task level is cleared at step 542, which is follosed by a step 544 where the flag is set at b7 (this flag will be hereinafter referred to as RUN flag). The steps 542 and 544 show that the activation request for the task of the corresponding taks level proceeds to the state in which the task is to be executed. Accordingly, at a step 546, the start address of the task program of the task level concerned is retrieved. This address can be determined from a start address table TSA provided in ROM 104 in correspondence to TCW's of the various task levels. By jumping to the determined start address, the execution of the task program concerned takes place.

Referring again to Fig. 14, if now the decision at the step 530 results in "NO", this means that neither an activation request was issued to the program of the task level being retrieved nor was the program momentally interrupted. In this case, the scheduler program proceeds to the retrieval of the task of the following priority level. In other words, the task level $n$ is incremented to $(n+1)$. At this time, it is checked whether or not the incremented level index $(n+1)$ is maximum max, i.e. $(n+1)=4$. If not, the scheduler program proceeds to the step 530. The above processing is reported until $n$ has become equal to MAX or 4, whereupon the interrupted program for the background jobs is regained at a step 536. In other words, at step 536 it is confirmed that all programs for the tasks of the levels "0" to "3" are not required to be executed, whereupon the processing returns to the point of the background job program at which the program has been interrupted in response to the appearance of IRQ.

Fig. 15 illustrates the relationship between the task control words TCW, the TSA task start address table and the task activation periods TTM0 to TTM3 representing the task activation time intervals provided in the ROM. In correspondance to the task control words TCW0 to TCW3 the task activating periods TTM0 to TTM3 are setored in the ROM. For any INTV IRQ the counters CNTR of the TCW are updated successively and a flag is set at b6 of the associated TCW upon coincidence of the content of the respective counter CNTR and the TTM for the task. When the flag is thus set, the start address of the task is retrieved from the task start address table TSA. A jump is then made to the retrieved start address, whereupon the selected one of the programs 1 to 4 is executed. During the execution, a flag is set at b7 of the TCW in RAM 106 corresponding to the program being executed. Thus, as soon as this flag is set, it is decided that the associated program is being executed. In this way, the program for the task scheduler 242 shown in Fig. 5 is executed. Consequently, one of the task programs 252 to 258 of the task levels "0" to "3" is executed. When an IRQ is issued during the execution of one of the task programs the execution is interrupted again as to deal with the IRQ. Under the condition, no IRQ is issued, the processing of the task being instantly under execution will come to an end. Upon termination of the execution of the task program, the EXIT program 260 is then executed.

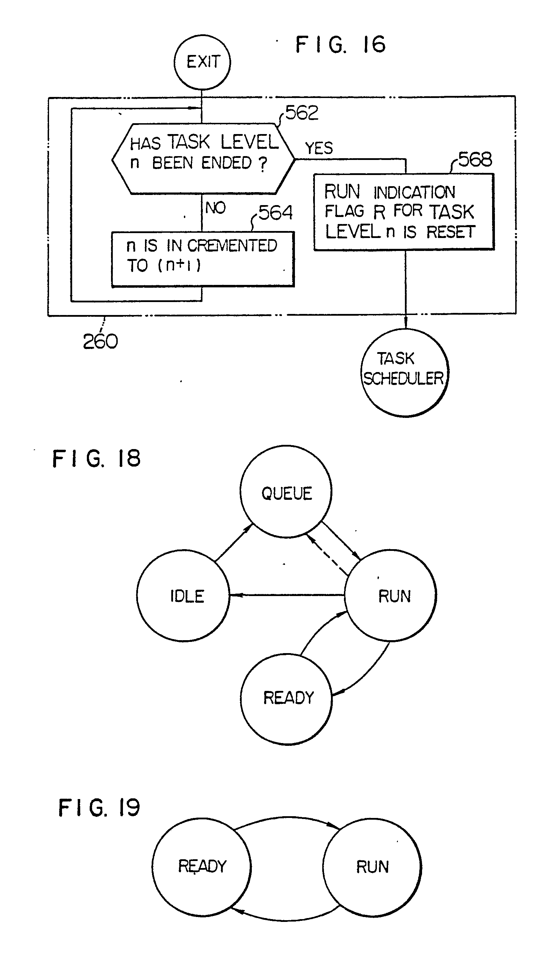

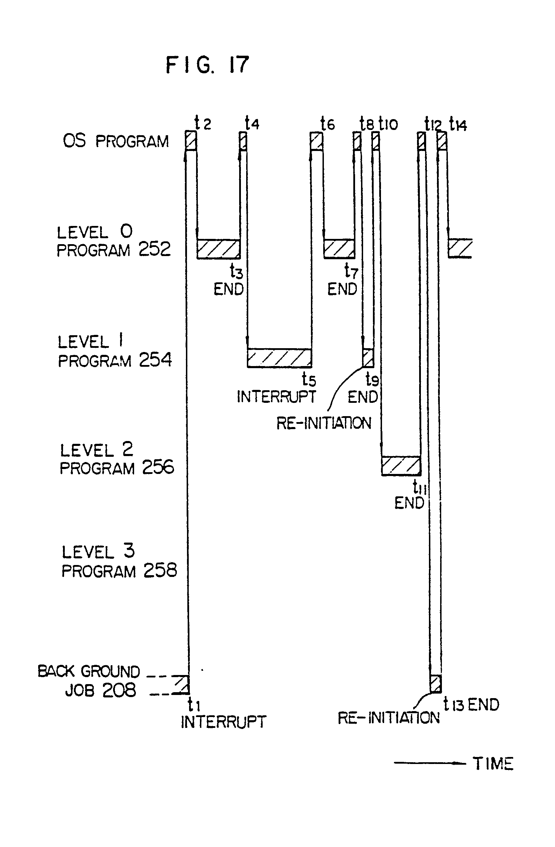

The EXIT program 260 is shown in detail in Fig. 16. This program is composed of steps 562 and 564 for identifying the ended task. At steps 562 and 564, retrieval is made successively starting from the task of level "0" to identify the task level of the ended task. At the next step 568, the flag RUN set at b7 of TCW corresponding to the ended task is reset, which means that the program for the identified task has been completely terminated. The processing is taken back again by the task scheduler 242, whereby the following program to be executed is determined.

The execution and interruption of the program will be described in more detail with reference to Fig. 17. It is now assumed that the program 208 for the background job which is assigned to the lowest priority level is under execution. When an INTV IRQ is issued at time t1, the supervisory program or OS program is to be executed instead of the background job program, whereby it is determined that the task program of level "0" is requested to be executed, for example through the execution of the programs 224 and 242 illustrated in Fig. 5. At a time point t2, a flag "1" is set at b7 of TCWO, while b6 thereof is cleared, whereby upon the program 252 of level "0" is executed. Assuming that a request for activating the program 254 of level "1" is also issued simultaneously, flag "1" is set also at b6 of TCW1. However, the program to be executed at first is the task program of level "0" because of its higher priority level. When the execution of the program of level "0" is ended at time t3, the OS program is regained to clear the flag at b7 of TCW0 and the request for executing the program 254 of level "1" of the next following priority level is accepted and preparation is made for the execution thereof. This program 254 starts to be executed at t4. It is assumed that during the execution of the program 254 of level "1" for which sufficient time is necessary a further INTV IRQ is issued. Then, the execution of the program of level "1" is interrupted at t5 and the OS program is regained. When it is determined that the program to be activated in response to the present INTV IRQ is the program 252 of level "0" assigned with the highest priority level, the program 252 is executed at t6. More specifically, flag "1" is set at b7 of TCW0, while the flag at b6 is cleared and the start address for the program 252 is retrieved from TSA0 to thereby allow the program 252 to be executed. This program comes to an end at a time point t7, resulting in that the OS program is regained to clear the flag "1" at b7 of TCW0 with the aid of the EXIT program. Subsequently, by means of the task scheduler program 242 of the OS program, another activation request, or alternatively, the program which has been interrupted is retrieved. Since the task program 254 of level "1" is interrupted, this program 254 is again executed. The re-initiation of the task program 254 is effected by feeding the content of the CPU 102 which has been set aside at a standby area at the time point t5 again back to the CPU 102. The program 254 is thus restarted and comes to an end at a time point t9. The OS program is then regained and the termination of the program 254 is indicated through the execution of the EXIT program, i.e. by clearing of flag "1" at b7 of the TCW1.

In succession, the task scheduler program 242 is executed to search a possible activation request to the task programs as well as to the program being interrupted. For example, it is assumed that the flag "1" set at b6 of the TCW2 corresponding to the task program 256 is identified. Then, the start address for the program 256 is retrieved from the TSA2 and a jump is made to the retrieved start address at which the program 256 starts to be executed. At this time, the flag at b6 of the TCW2 is cleared while the flag "1" is set at b7 of TCW2. When the execution of the program 256 is ended at a time point t11, the OS program is regained, whereupon the EXIT program is executed to clear the flag set at b7 of the TCW2. Subsequently, another activation request for the task program as well as to the interrupted program is searched. When no program to which the activation request was issued or which has been interrupted is determined, the data of the background job program 208 set aside at the standby area is fed back to the CPU 102 to be processed. When the INTV IRQ is issued at a time point t13, the content existing in the CPU at that time is transferred to the standby area and the OS program is required to determine the program to which the INTV IRQ was issued to activate the processing through the associated program.

As may be seen from the above explanations that whenever an interrupt request is issued, the program under execution is interrupted and the OS program is regained as to allow the program of the highest priority level to be executed. In this manner, the program having more significance is allotted to a processing time having preference over less significant programs.

Further, since the programs are assigned to the respective different levels in accordance with the priorities thereof and executed organically in succession dependent on the priority levels, while indication is made as to the completed termination of the executed program, the time required for executing the OS program is sufficiently reduced, for involving an enhanced processing efficiency. Further, since any competitive interrupts are not issued among programs having the same priority levels, the standby area to which the content of the interrupted program is temporally loaded can significantly be reduced, since the standby area is sufficiently as it is provided for each of the priority levels of the programs.

The manner in which one of the programs 252, 254, 256 and 258 of different priority levels is executed in accordance with the procedures described hereinbefore in connection with Figs. 5 and 17 is shown in Fig. 18. In a standby state labelled by IDLE, no request to activate a program is issued. When the activation request is generated, a flag "1" is set at b6 of the associated TCW to indicate the necessity of an activation. The time duration required for the shift from the state IDLE to QUEUE is determined in dependence on the priority level of the program to which the activation request is issued. In the state QUEUE, the sequence of the execution is determined in accordance with the priority level allotted to the programs. In order to execute the program concerned, the flag at b6 of the associated TCW has to be cleared first, while the flag must be set at b7. The state in which the program is executed is represented by RUN in Fig. 18. Upon termination of the execution, the flat at b7 of the associated TCW is cleared to indicate the completed termination of the executed program. The state RUN is now replaced by the state IDLE for awaiting a following activation request. When IRQ is issued during the execution of RUN of a program, the program has to be interrupted. The content present at that time in the CPU is set aside at a standby area. This state is indicated by a label READY. When the interrupted program is to be executed again, the content in the standby area is again fed back to the CPU. In other words, the state READY is again changed to the state RUN. In this manner, each of the programs may repeatedly take the four states shown in Fig. 18. The flow shown in Fig. 18 is a typical flow. It may happen that a flag "1" is set at b6 of the TCW in the state READY. This is for example, the case in which a next activation request appears to the very program that is interrupted, if the flag set at b7 is allotted to a higher preference over the flag set at b6. Accordingly, the task program being interrupted is executed at first. When the flag at b7 is reset, the program just executed is directly shifted to the state QUEUE without taking the state IDLE.

As may be seen from the foregoing description, the programs 252, 254, 256 and 258 of the different priority task levels take necessarily one of the states shown in Fig. 18. In this connection, it is important to note that the state READY is not present for each of the individual programs but for each of the priority levels of the programs. For example, the programs of level "1" comprises CARBC, IGNCAL and DWLCAL programs. The state READY is not present each for these individual programs but present for the programs of level "1" as a whole. This means that the standby area does not need to be provided for each of the different programs, but it is sufficient to provide the standby area for each of the different priority levels of the programs. Accordingly, the plural standby areas in RAM 106 in Fig. 15 are indicated by 602.

Fig. 19 shows the shifting in the state of the background job program. When an IRQ is issued during the execution of the program, i.e. in the state RUN, the content in the CPU is set aside at the relevant standby area, whereby the state READY is taken. When the interrupt request has been processed, the content in the standby area is fed back to the CPU, whereby the state RUN is regained. The standby area as indicated by 602 in Fig. 15 can be used for this purpose.

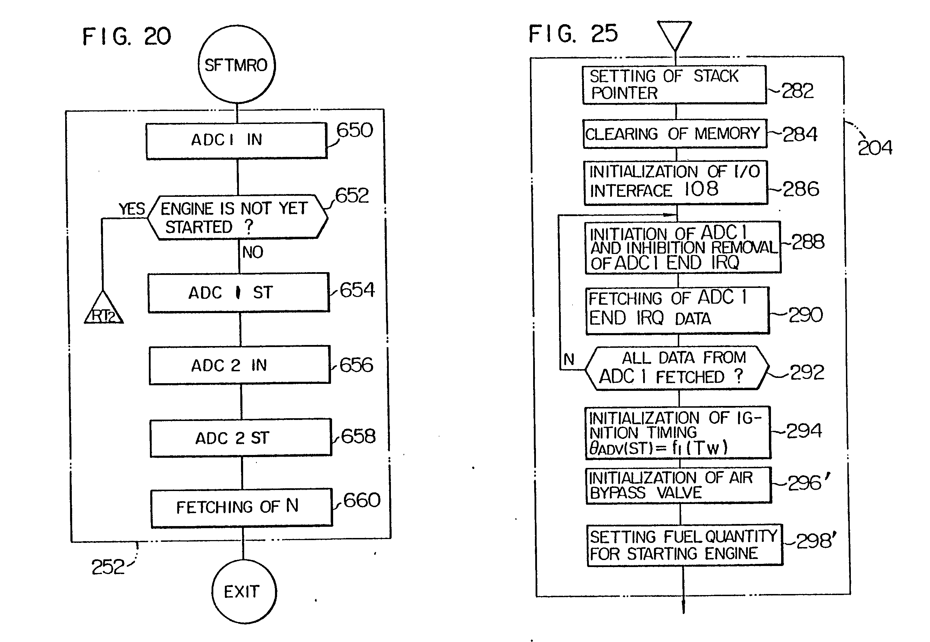

Fig. 20 shows a program of level "0". The activation request to this program is generated at the timing of 10 ms, as is shown in Table 1. At a step 650, data of ADC1 is fetched and at a step 654 an activation request for fetching the next data from ADC1 is issued. Step 652 is provided to allow ADCEND IRQ to be effected before starting the engine. When a flag indicating that the engine is not yet started is set, RTI, i.e. the program being interrupted is regained. This program corresponds to the INITIALIZ program 204 shown in Fig. 5. At a step 656, data is fetched from ADC2. At a succeeding step 658, an activation is set to fetch the next data from ADC2. At a step 660, engine speed data is fetched or sampled. When all of these steps have been processed, then the subprogram EXIT of the OS program is executed, thereby to clear the flag set at b7 of the associated TCW.

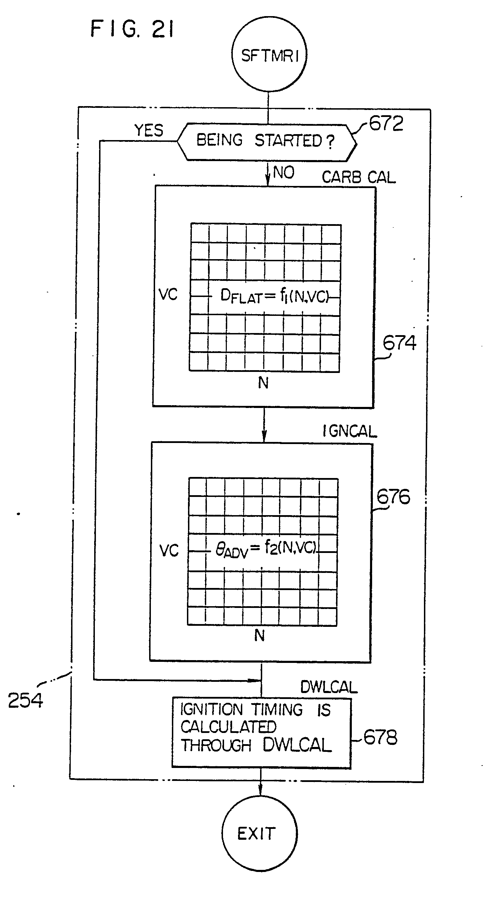

Fig. 21 shows a program of level "1". At a step 672, it is decided whether the engine is being started. If the answer is affirmative, the program jumps to a step 678 at which the ignition timing is calculated. At a step 674, the CARBCAL program is executed, which is followed by a step 676 at which the IGNCAL program is executed. These program executions are effected through data retrieval from the associated tables. At the step 678, the DWLCAL program is executed to arithmetically determine the duration or current flowing time for the ignition.

The LAMBDA program allotted to the task level "2" is a program for correcting the λ-sensor, while the program HOSEI of level "3" is a program for determining correction factors in consideration of the atmospheric temperature, cooling water temperature or the like. Since parameters for determining these factors have large time constants, parameters varying at a long interval may be utilized to this end.

As described hereinbefore, the INTV IRQ is generated according to the teaching of the invention so that all the arithmetic operations for control may be carried out independently from the revolution number of the engine. An arrangement of a circuit for generating the IRQ is schematically shown in Fig. 22. Referring to this figure, a register 735 is loaded with data for setting the timer interrupt period (e.g. 10 ms) from the CPU through a data bus 752, while a counter 736 is concurrently supplied with clock pulses CLOCK. The data content placed in the register 735 is compared with the count output from the counter 736 through a comparator 737 which produces an output signal upon coincidence of the contents between the register 735 and the counter 736. The output signal from the comparator 737 is used to set the flip-flops 738 and 740. Simultaneously with the setting of the flip-flops 738 and 740, an output signal is produced from AND circuit 747, whereby the counter 736 as well as the flip-flop 738 are reset. When a flip-flop 739 is set, the timer interrupt signal IRQ is produced through an AND circuit 748 and an OR circuit 751. The flip-flop 739 serves to mask the timer interrupt signal IRQ when this signal is unnecessary (e.g. when the engine is being started). At that time, the flip-flop 739 is supplied with a reset command from the CPU.

On the other hand, the ENST interrupt request which is to be generated when the engine is stopped accidentally or due to a fault, is produced through a similar circuit arrangement as that of the timer interrupt, which comprises a register 741, a counter 742, a comparator 743, AND circuits 749 and 750, and flip-flops 745 and 746. However, the signal supplied to the counter 742 is the one generated during the rotation of the engine. This signal is the reference angular signal REF produced by the sensor 146 shown in Fig. 4 and may be produced for every rotation of 180° of the crank shaft in case a four-cylinder internal combustion engine is used. Since the counter 742 is reset when the signal REF is produced, no ENST interrupt signal can be generated. However, when the engine is stopped for the reasons described above, the REF signal will disappear, whereby the counter 742 is released from the reset state. Thus, the ENST interrupt signal can be generated in the manner described above in conjunction with the generation of the timer interrupt signal.

The timer interrupt signal IRQ triggers the activation of tasks as illustrated in the flow chart of Fig. 5, whereby the tasks are processed in accordance with the allotted priority levels. Namely, upon receipt of an interrupt request, the CPU analyses the cause of the received interrupt request. When the interrupt request is determined as to be the timer interrupt, the tasks 252, 254, 256 and 258 allotted to priority levels are activated and the task selected through the task scheduler 242 is executed. When the execution of the task is terminated, a corresponding indication is made by the execution of the EXIT program. In response to the following timer interrupt signal, the following task to be executed is selected by the task scheduler.

Upon appearance of the ENST interrupt signal, the fuel pump as well as the ignition system are turned off. All the input/output control circuits are disabled.

In a similar manner, upon occurrence of the ADC1 END IRQ or the ADC2 END IRQ, a flip-flop 764 is set to "1", when the sequence operation of ADC1 has been terminated. When a flip-flop 762 is set to "1" from the CPU through the bus 752, and the AND gate 770 is then enabled to produce a service request signal to the CPU for dealing with ADC1 END IRQ. However, when the flip-flop 762 is not set to "1", ADC1 END IRQ is inhibited. The same applies to ADC2. Upon termination of the sequence operation of ADC2, the flip-flop 768 is set to "1". When a flip-flop 766 is set to "1" at that time, ADC2 END IRQ is generated through an AND gate

14

772 and the OR gate 751. On the other hand, unless the flip-flop 766 is set to "1", the AND gate 772 remains disabled, resulting in that no ADC2 END IRQ of being generated. In this manner, only when the flip-flop 739, 745, 762 and/or 766 is set to "1", the associated IRQ is issued and vice versa.

As listed in Table 1, the priorities of the programs are determined in dependence on the functions of the programs, wherein interval activation requests are issued in accordance with the priority levels. In this manner, main tasks for controlling engine operation are activated at predetermined intervals independently on the rotational speed of the engine. Accordingly, the load imposed to the CPU may remain substantially constant to assure controls with high reliability and performances.

According to the arrangement shown in Fig. 5, the controlling efficiency is further improved by virtue of the fact that the activation period is varied for every priority level of programs. Further, since an EXIT indication is made for each termination of a program, the execution of the OS program is not required at all upon transfer of programs among those of the same priority level, involving a high speed processing to an advantage.

Since the programs of the same priority level are not mutually interrupted, it is sufficient to provide the standby area for different priority levels of the programs rather than for the individual programs. Thus, the space for the standby area can be significantly reduced.

After the engine has been started, both of ADC1 END IRQ and ADC2 END IRQ are masked. Thus, the use time of the OS program can be correspondingly reduced to enhance the processing efficiency.

According to the arrangement shown in Fig. 15, it is sufficient to provide a task control word (TCW) for each of the priority levels of the task programs rather than for each of the programs unlisted in the Table 1, whereby the area for the TCW can be significantly reduced.

By virtue of such an arrangement that the TCW is provided with the flag (b6) for indicating the request for activating the associated one of the programs together with the flat (b7) for indicating the execution of the program, the execution of individual programs, interruption and the regaining thereof can be effected smoothly in accordance with the priorities levels assigned to the programs, as a result thereof a highly improved control efficiency of the CPU can be attained.

Next, a second embodiment of the invention applied to an internal combustion engine of a fuel injection type will be described with reference to Figs. 23 to 33.

At first it should be noted that the second embodiment differs from the first only in respect of the type of the internal combustion engine and thus the essential features of the invention for controlling the engine operations remain essentially unchanged.

Referring to Fig. 23 showing a control apparatus for the whole system of an internal combustion engine of fuel injection type, intake air is supplied to engine cylinders 1008 from an air cleaner 1002 through a throttle valve chamber and an air intake conduit or manifold 1006. Combustion-produced gas is exhausted to the atmosphere by the cylinders 1008 though an exhaust conduit 1010.

An injector 1012 for fuel injection is provided in the throttle valve chamber 1004. The fuel injected from the injector 1012 is atomized in an air passage provided within the throttle valve chamber 1004 and mixed with air to thereby form a fuel-air mixture which is then supplied to the combustion chambers of the engine cylinders 1008 through the intake manifold 1006 and associated air-intake valves 1020.

Throttle valves 1014 and 1016 are provided in the vicinity of the outlet orifice of the injector 1012 at the upstream side thereof. The throttle valve 1014 is mechanically interlocked with an acceleration pedal so as to be operated by a driver. On the other hand, the throttle valve 1016 is arranged to be controlled by a diaphragm chamber 1018 such that the valve 1016 is fully closed in a range of a small air flow, while the throttle valve 1016 is increasingly opened due to a negative pressure in the diaphragm chamber 1018 which pressure in turn is increased as the air flow is increased, thereby to prevent the resistance to the air flow from being increased.

A bypass air passage 1022 is disposed in the throttle valve chamber 1004 at the upstream side of the throttle valves 1014 and 1016. An electric heater element or hot wire 1024 constituting a part of a thermal-type air flow meter is disposed in the air passage 1022. Derived from the thermal type air flow meter is an electric signal which varies in dependence on the air flow ratio and the thermal conductivity of the heater element 1024. Because of being disposed in the bypass passage 1022, the hot wire element 1024 is protected from the adverse influence of a high temperature gas produced upon occurrence of back-fire in the cylinders 1008 as well as from contamination due to dust carried by the intake air flow. The outlet of the bypass air passage 1022 is located in the vicinity of the narrowest portion of a Venturi structure, while the inlet port of the bypass passage 1022 is opened in the throttle valve chamber at the upstream side of the Venturi.

The fuel is supplied to the fuel injector 1012 from a fuel tank 1030 through a fuel pump 1032, a fuel damper 1034, a filter 1036 and a fuel passage regulator 1038. The fuel pressure regulator 1038 serves to control the pressure of fuel supplied therefrom to the injector 1012 through a pipe 1040 so that the difference between the pressure of the fuel supplied to the injector 1012 and the pressure prevailing in the intake manifold 1006 into which the fuel is injected is constantly maintained at a predetermined value. Reference numeral 1042 denotes a feed-back pipe through which fuel in excess is returned to the fuel tank 1030 from the fuel pressure regulator 1038.

The fuel-air mixture sucked through the intake valve 1020 is compressed by a piston 1050 within the cylinder and undergoes combustion when ignited by a spark produced at a spark plug 1052. The cylinder 1008 is cooled by cooling water the temperature of which is measured by a water temperature sensor 1056. The output quantity from the sensor 1056 is utilized as a control parameter representing the temperature of the engine. The spark plug 1052 is supplied with a high voltage pulse from an ignition coil 1058 in a proper ignition timing.

A crank angle sensor (not shown) is provided in combination with a crank shaft (not shown) of the engine for producing a reference angle signal for every reference crank angle and a position signal for every predetermined angle (e.g. 0.5°) of rotation of the engine.

The electrical signals output from the crank angle sensor, the water temperature sensor 1056 (the output signal of which is denoted by 1056A) and the thermal-type air flow sensor 1024 are applied to the input of a control circuit 1064 which comprises a microcomputer and an associated circuit to be arithmetically processed, whereby the injector 1012 and the ignition coil 1058 are driven by the signals derived from the output of the control circuit 1064.

Further disposed in the throttle valve chamber 1004 is a bypass passage 1026 communicated to the intake manifold 1006 through the throttle valve 1016, and a bypass valve 1062 adapted to be opened or closed under control is disposed in the bypass passage 1026.

The bypass valve 1062 disposed in the bypass passage 1026 across the throttle valve 1016 is controlled such as to vary the flow section area of the bypass passage 1022 in accordance with the lift of the valve 1062 which in turn is actuated by a driving system controlled by a pulse current output from the control circuit 1064. To this end, the control circuit 1064 produces a periodic ON—OFF signal for controlling the valve driving system which in turn supplies a control signal to the associated drive unit of the bypass valve 1062 for adjusting the lift or stroke thereof.

Fig. 24 shows a general arrangement of an overall electronic control system for the internal combustion engine of fuel injection type described above. In this figure, the components being the same as or equivalent to those shown in Fig. 4 are denoted by the same reference numerals. The components which differ from those shown in Fig. 4 will be described hereinafter.

The analog output signal from the air flow sensor denoted herein by 1024 (hereinafter referred to as AFS) is supplied to the ADC2 to be converted into a corresponding digital quantity through an analog-to-digital converter circuit 172 (hereinafter referred to as ADC) and set into a register 174 (hereinafter referred to as REG).

Then the control operation and objects to be controlled by the pulse output circuit in dependence on the results of arithmetic operations of the CPU will be described. An injector control circuit 1134 (hereinafter referred to as INJC) functions to convert the digital value representing the results of the arithmetic operation into a corresponding pulse signal. More specifically, a pulse signal having a pulse duration or width corresponding to a quantity of fuel to be injected is produced by the INJC 1134 and applied to an injector denoted herein by 1012 through an AND gate 1136.

An ignition pulse generator circuit 1138 (hereinafter referred to as IGNC) comprises a register for setting therein an ignition timing (hereinafter referred to as ADV) and a register (hereinafter referred to as DWL) for setting therein a time point for the current flow through a primary winding of the ignition coil. These data placed in the registers ADV and DWL are supplied from the CPU 102. The pulse signal produced on the basis of the data placed in these registers are supplied through an AND gate 1140 to the amplifier 62 described hereinbefore in connection with Fig. 2.

The opening degree of the bypass valve denoted herein by 1062 is controlled by a pulse signal supplied thereto from an ignition control circuit 1142 (hereinafter referred to as ISCC) through an AND gate 1144. To this end, the ignition control circuit ISCC 1142 is composed of a register ISCD for setting therein a pulse width of the pulse signal and a register ISCD for setting therein a pulse repetition rate or period of the pulse signal.

The EGR control pulse generator circuit 178 (hereinafter referred to as FGRC) for controlling the transistor 90 which in turn controls the EGR control valve 86 shown in Fig. 3 is composed of a register EGRD for setting therein a value representative of the duty cycle of the pulse signal applied to the transistor 90 and a register EGRP for setting therein a value representative of the pulse repetition period of the same pulse signal. The output pulse from the EGRC is applied to the transistor 90 through an AND gate 1156.

The single-bit input/output signals are controlled by the circuit DIO (128). The input signals include the IDLE-SW signal, TOP-SW signal and the START-SW signal described hereinbefore. The output signal includes a pulse output signal for driving the fuel pump. The DIO is provided with a register 192 for determining whether the terminal thereof is to be used as input terminal or output terminal, and a register DOUT 194 for holding the output data.

A mode register 1160 (hereinafter referred to as MOD) functions to hold instructions for commanding the various inner states of the input/output circuit 108. For example, in accordance with the command set in this MOD register 1160, all AND gates 1136, 1140, 1144 and 1156 are controlled in respect of the enabling and the disabling conditions. Further, in accordance with the content in the MOD register 1160, initiation as well as termination of the output signals from INJC, IGNC and ISCC can be controlled.

In Table 1 shown hereinbefore, the program CARBC of level 1 is unnecessary in case of the embodiment now described because no carbureter is provided and has thus to be replaced by a program INJC which has a function to arithmetically determine the fuel injection quantity. The activation of this

16

# 0 017 219

program is effected by an interrupt request INTV IRQ produced for every 20 ms. Except for this program, the content listed in Table 1 applies to the second embodiment, too.

We describe now the program INITIALIZ only in respect of the difference from that shown in Fig. 7. At a step 290 shown in Fig. 25, the program AD1 IN is again executed upon completion of the analog-to-digital conversion of the output signal from the sensor 1056, whereby the digital value representing the output signal from the water temperature sensor TWS 134, set in the register REG 166 is fetched and held at the DATA area of ROM 104 in a similar manner as in case of the first embodiment. At a step 296, the opening degree of the air bypass valve 1062 is arithmetically determined for starting the engine on the basis of the characteristic relationship illustrated in Fig. 10 in a similar manner as in case of the first embodiment, the results of the arithmetic operation being placed into the register ISCD. At a step 298, the initial value for the fuel injection timing is arithmetically determined. To this end the arithmetic operation is effected on the basis of a relationship illustrated in Fig. 26 and the results thereof are placed into the register INJD. Fig. 26 graphically shows preset values of the duration of fuel injection or fuel quantity to be injected relative to the temperature of cooling water of the engine. This graph corresponds to that shown in Fig. 10.

The program for the background job is executed in accordance with the flow chart shown in Fig. 27.

At a step 410, it is decided whether the IDLE-SW 148 is turned on. If so the exhaust gas is not to be recirculated. Accordingly, the program proceeds to a step 412 at which the register EGRD is set to zero. At a step 414, the duty cycle of the air bypass valve 1062 is arithmetically determined in dependence on the temperature of the cooling water, with the results being placed into the register ISCD at a step 416. In accordance with the value set at this register, the air bypass flow to the engine is determined. Upon termination of the step 416, the step 410 is again executed. The above processing is repeated in the closed loop, as long as no service request for IRQ is issued to the CPU.

On the other hand, when the IDLE-SW is turned off, the ISC operation is not carried out. Consequently, the register ISCD is set to zero. In this state, the EGR quantity is arithmetically determined. To this end, it is decided whether the cooling water temperature TW is above a predetermined level TA °C. If the answer is affirmative, the program proceeds to a step 426 to set the register EGRD to zero in order to inhibit the EGR operation. In contrast, when the cooling water temperature TW is below TA°C, the program proceeds to a step 424 to decide whether the cooling water temperature TW is below a predetermined level TB °C. If so, the EGR operation is also inhibited. Accordingly, the step 426 is executed to set the register EGRD to zero. The temperature level TA at the step 422 indicates the upper limit of TW with TB indicating the lower limit of TW in the temperature range in which the EGR operation is allowed to be carried out. Thus, when $TB \leq TW \leq TA$, the program proceeds to a step 428 where the quantity of EGR (i.e. exhaust gas recirculation) is arithmetically determined on the basis of the intake air quantity QA and the engine rotational speed N through searching a corresponding map which is provided in the ROM at addresses B700 to B7FF shown in Fig. 6. The retrieved value is set at the register EGRD at a step 430. Consequently, the EGR valve is opened to the opening degree determined on the basis of the value set at the register EGRD and the duty cycle preset at the register EGRP, whereby the EGR operation is now performed.

In case of the flow chart shown in Fig. 27, the step 410 is regained upon the end of the step 430 or step 416. Accordingly, the computer constantly executes the routine from the step 410 to the step 416 for controlling the air bypass valve 1062 or the routine from the step 420 to the step 430 for controlling the EGR quantity.

In this manner, unless the IRQ is issued, the program started from the start point 202 (Fig. 5) continues to be executed through the subprograms INITIALIZ 204 and MONIT 206 to the subprogram ISCCO for the background job or to the subprogram EGR CON.

Fig. 28 is a flow chart illustrating the execution of a program of level "1". At a step 672, it is decided whether the engine is being started. If the answer is affirmative or "YES", the fuel quantity as well as the ignition timing required for the engine starting operation are determined by other relevant programs of level "1" which are not required to be executed. In other words, when the inhibition of the INTV IRQ is removed at the steps 308 and 310 of the program MONIT shown in Fig. 8 whereby the program SFTMR1 is activated, for example, the result of the decision at the step 672 will be affirmative or "YES" because the starter flag is set. Consequently, the timing at which the primary winding of the ignition coil is made conductive is arithmetically determined at a step 678, whereupon the execution of the program is terminated. In case the engine is not being started, the program proceeds from the step 672 to a step 674 at which the program INJC is executed, whereby the fuel injection quantity is determined from the AF man shown in Fig. 6 on the basis of the intake air quantity QA determined through the execution of SFTMRO and the rotational speed N of the engine. The injection quantity is modified by another factor through the execution of the program LAMBDA and additionally corrected under consideration of other factors through the execution of the program HOSEI. The value thus obtained is set at the register INJD.

When the execution of the program INJC comes to an end, the IGNCAL program is executed at a step 676. By the execution of the program IGNCAL, the ignition timing is determined on the basis of the factors QA and N retrieved from the map shown in Fig. 6, the results of this operation being set at the register ADV.

Upon termination of the program IGNCAL, the DWLCAL program is executed at a step 678 to determine the time point at which the primary winding of the ignition coil is turned on. The value thus obtained is loaded in the registger DWL.

17

When the programs INJC, IGNCAL and DWLCAL have been executed, jump is made to the program EXIT for issuing the indication of the termination of these programs.

Fig. 29 shows in detail CABC 165, FSC 176, EGRC 178 shown in Fig. 4 and ISCC 1142 and EGRC 178 shown in Fig. 24. The content of the registers CABD, FSCD, ISCD and EGRD shown in Fig. 24 represents the width of pulse, respectively, and corresponds to a register 802 shown in Fig. 29. Further, there is provided a register 806 which corresponds to CABP, FSCP, ISCP and EGRP.

It is now assumed that a bit "h" is set at a bit position b0 in a MODE register 1160. Then, both AND gates 1144 (Fig. 24) and 816 are enabled. A timer 804 constituting a counter circuit counts clock signals from the AND gate 816. The count value B is compared with the content placed into the register 806 through a comparator 810. When the count value B is increased beyond the value C stored in the register 806, the timer 804 is reset. In this manner, the timer 804 repeats the counting operation at a period determined by the value C stored in the register 806.

The count value of the timer 804 is compared with the value stored in the register 802 through a comparator 808. When the count value B of the timer counter 804 is smaller than the value A set at the register 802, a flip-flop 812 is set. On the other hand, when the value B is greater than A, the flip-flop 812 is reset. In this manner, the time interval during which the flip-flop 812 is in the set state is determined by the value A stored in the register 802. By increasing the value A, the duration of the set state of the flip-flop 812 is correspondingly increased.

Since the counting operation of the timer 804 is repeated at a frequency corresponding to the value set at the register 806, the set output of the flip-flop 812 is repeatedly produced at a frequency corresponding to the value set at the register 806 and is outputted through the AND gate 1144 enabled by the bit of level "H" at b0 of the MODE register 1160 (Fig. 24).

When the bit at the bit position b0 of the MODE register 1160 is set at level "L", the AND gates 1144 and 816 are disabled or blocked, whereby the output from the flip-flop 812 is interrupted and simultaneously, the input to the timer 804 is also interrupted.

By supplying the control data to the MODE register shown in Fig. 24 from the CPU, a start or stop of the operation of the circuit shown in Fig. 29 can be controlled. In case of the circuit shown in Fig. 29, the AND gates 1144 and 816 are controlled by the bit at the position b0 of the MODE register the bit thereof is destined to control the ISCD (1142) shown in Fig. 24. The EGRC 178 shown in Fig. 24 is implemented in a circuit arrangement similar to that shown in Fig. 29. However, it should be noted that while a start and stop of the operation of the ISCC 1142 is under the control of the bit at b0 of the MODE register, the operation of the EGRC 178 is controlled by the bit at the bit position b2 of the MODE register.

Fig. 30 shows in detail a circuit arrangement of the IGNC 168 shown in Fig. 4 and the IGNC 1138 in Fig. 24. The data for controlling the time point at which the primary winding of the ignition coil is energised are load in the DWL register from the CPU, while the data for the ignition timing are set at the ADV register. It is now assumed that the value set at the DWL register 1168 is represented by A, while the set value of the ADV register 1169 is represented by C.

Assuming that the bit at the bit position b1 of the MODE register 1160 is at the "H" level, the AND gates 1156 and 860 are then enabled, i.e., are in the conducting state, whereby POS pulses are applied to the counter 850 through the AND gate 860. Consequently, the count value of the counter 850 is increased as a function of the crank angle of the engine and is cleared by the REF (reference) pulse. The count value at which the count 850 is cleared by the REF pulse is represented by B. When the value A set at the DWL register 1168 is greater than B, the output from the comparator 852 is supplied through the OR gate to the flip-flop 856 to reset the latter. Consequently, no pulse output is produced from the AND gate 1156. When the count value of the counter 850 is increased beyond the value A set at the DWL register 1168, the flip-flop 856 is set by the output pulse from the AND gate 864. The output set from the flip-flop 856 is then applied to the ignition system through the AND gate 1156, resulting in that a current flows through the primary winding of the ignition coil. When the count value is further increased, the flip-flop 856 is again reset by the output signal (C≤B) from the comparator 854. Then, the pulse output from the AND gate 858 is interrupted, resulting in the generation of ignition, spark.

Fig. 31 shows in detail an arrangement of the DIO 128 described hereinbefore in connection with Figs. 4 and 24. The signal from the bit position of DDR at which the bit "H" is set, is applied to the associated one of the tristates 872 to 886, whereby the associated tristate becomes conductive. Consequently, the bit of the DOUT corresponding to the bit "H" in the DDR is outputted through the associated tristate. On the other hand, signals present at lines DI00 to DI07 can be arbitrarily read by the CPU through the buffer amplifiers 892 to 904. The signals present at the lines corresponding to the non-conducting ones of the tristates 872 to 886 depend on external conditions. Accordingly, the external conditions are read for these lines.

Fig. 32 shows in detail an arrangement of the INJC 1134 shown in Fig. 34. The REF pulse derived from the output of the crank angle sensor is produced at a predetermined crank angle (e.g. 80° or 90°) before reaching the upper dead center (TDC). Relationship between the upper dead center (TDC) of the crank and the REF pulse is illustrated in Fig. 33 at (A) and (B). Under the assumption that the bit at the bit position b4 of the MODE register 1160 is at "H" level, the gates 910, 912 and 1136 (Fig. 24) are in a conducting state. Accordingly, the count value of a counter 904 is cleared by every REF pulse, as is illustrated in Fig. 33 at (C). A register 902 functions to receive and hold the value A from CPU. This value A is utilized to determine the

# 0 017 219

time point at which the fuel injection is initiated. The value A is compared with the count value B through the comparator 906 as to set a flip-flop 908.

When the flip-flop 908 is set, a pulse is supplied to the injection valve 1012 through an AND gate 1136. A gate 912 is opened, whereby a timer 916 constituting a counter counts the clock pulses. A register 914 corresponds to the INJD register shown in Fig. 24. During a time interval corresponding to a value C set in this register, the injection value is opened. More particularly, if the count value D of the timer 916 is smaller than the set value C, the flip-flop 920 is set. However, when $C \leq D$, the flip-flop 920 is reset to block the AND gate 1136. Thus, the injection pulse is interrupted.

In the manner described above, the time point for initiating the fuel injection as well as the opening duration of the fuel injection valve can be controlled.

By setting the bit at the bit position b4 of the MODE register 1160 to zero ("L" level), the gate 1136 is blocked and all operations can be stopped.

As will be seen from the above description, the start and the stop of the output side of the input/output interface can be controlled at will from the CPU, whereby erroneous operations can be prevented from occurring with a high reliability.

For preparing the start of the engine, initial values for activating the input side of the input/output interface circuit such as the value for measurement of the rotational speed of the engine are set and input or output designation is made to the individual bits of the DIO. Further, the conditions of the IRQ for requesting services from the input/output interface circuit 108 to the CPU 102 are set, while inhibition of the IRQ at the input side is removed. Then, the input data required for the start of the engine are fetched and the values to be set for the starting operation are arithmetically determined on the basis of the fetched data. After these values have been set at the individual registers of the input/output circuit 108, the starting operation of the starter is monitored. When the starting of the startor is confirmed, the system at the output side of the input/output circuit 108 is activated. The output side can be activated as soon as the engine starting takes place, since the conditions for the start of the engine have been beforehand prepared. Erroneous operation of the control system for the engine can be positively prevented, because the system at the output side of the input/output circuit 108 is prevented from being activated until the engine is started. Remarkable reduction can be attained in electric power consumption. Heat generation at the input/output interface circuit 108 and the amplifiers for amplifying output signals from the circuit 108 can be suppressed to a minimum.

Since the inhibition of the INTV IRQ is removed at the step 308 of the MONIT program shown in Fig. 8, the INTV IRQ is accepted during the processing in the closed loop extending through the "YES" outputs of the steps 302 and 304, whereby CPU 102 can perform more important jobs in accordance with INTV IRQ. In this manner, results of arithmetic operations obtained from the constantly updated input data can be set at the registers IDJD, ADV, DWL, ISCD and EGRD of the input system.

The battery voltage undergoes variation when the starter motor is started. In this connection, it is very important to alter rapidly and correspondingly the set values of the registers provided at the output side. Such updating or alteration can be accomplished according to the EP—A—80101756.

Since the arithmetic determination of the fuel injecting operation is realized through the properly timed interrupts according to the invention, the load imposed on the arithmetic unit can be stabilized independently from the operating conditions of the internal combustion engine.

## Claims

1. A method for controlling an internal combustion engine with the following steps:

— detecting operational conditions of the engine,
— computing a plurality of engine control quantities on the basis of the respective detected signals respectively by means of
    tasks which are carried out by a digital computer in a predetermined priority level sequence corresponding to the influence of the engine control quantity to be computed on the engine operation and activated by a plurality of interrupt signals each having a predetermined timing or otherwise interrupted by said interrupt signals,
    the interrupt signal intervals being allotted to the priority levels of the tasks, whereby the execution of tasks having a lower priority level is interrupted whenever a higher priority level task is to be executed and whereby after the execution of the respective higher level tasks the interrupted task is continued or alternatively another task is executed, and
— converting the engine control quantities being computed into actuating quantities for the actuators of the engine, characterized in that
— engine revolution independent interrupt request signals (ADC1 END IRQ, ADC2 END IRQ, INTV IRQ) are generated for requesting activation or interruption of main tasks (AD1IN, AD1ST, AD2IN, AD2ST, RPMIN; CARBC, IGN CAL, DWL, CAL; LAMBDA; HOSEI) controlling the normal engine operation,
— the time intervals of the respective interrupt request signals are allotted to the priority levels of the main tasks and

19

— the main tasks of the respective priority level are activated upon request by said interrupt request signals at predetermined time intervals independently of the rotational speed of the engine by task activation signals (Q) set by the digital computer upon coincidence of the count values of counters (CNTRO, CNTR1, CNTR2, CNTR3) being provided for each of the priority levels with preset values (TTM0, TTM1, TTM2, TTM3) representing the task activation time intervals.

2. A method according to claim 1, characterized by detecting for which main task among the plurality of the tasks a task activation signal (Q) has been set, the searching the task of the highest priority level among those to which said activation request is set.

3. A method according to claim 2, characterized in that the detection includes

— determining those tasks which are reached at the activation time.

4. A method according to one of claims 2 and 3, characterized in that the searching step includes

— detecting whether a task activation signal (Q) is present sequentially from the task program of the highest priority level.

5. A method according to one of the claims 1 to 4 characterized by setting a run indication (R) upon the activation of a task program.

6. A method according to claim 5, characterized by
— resetting the run indication (R) for the task program which has been executed and activating again said search.

7. A method according to one of claims 1 to 6, characterized in that task control words (TCW) including the task activation signal and the respective counter (CNTR) are associated with the respective priority levels of the tasks and stored together with a first changeable bit position indicating that the associated task is under execution or interrupted.

8. A method according to claim 7, characterized in that the task control words comprises a second changeable bit position allotted to the presence of an activation request for the associated task.

9. An apparatus for electronically controlling internal combustion engines according to the method of claim 1, comprising

— sensors (132, 134, 136, 140, 142, 144, 146, 148, 150, 152, 1024) detecting the operational conditions of the engine,

— a central processing unit (CPU 102) for digital arithmetic processing of the sensor output signals by executing a plurality of tasks each having a corresponding priority level and for generating digital control signals for controlling the engine,

— an I/O-device (108) being connected between the CPU (102), the sensors and a plurality of actuators (16, 18, 20, 22, 170, 188, 190, 1012, 62, 1062, 90, 1032) for providing digital input signals for the CPU (102) on the basis of electrical signals provided by the sensors and for generating digital signals as actuating signals for the actuators,

— a RAM (106), a ROM (104) and

— interrupt signal generating means generating interrupt signals for activating the tasks and interrupting tasks of lower priority levels upon corresponding interrupt signals (ADC$_1$ END IRQ, ADC$_2$ END IRQ, INTV IRQ) whenever a higher priority level task is to be executed whereby the task being interrupted is continued or a further task is carried out after the execution of a respective higher level task, characterized in that the interrupt signal generating means (735—740, 747, 748, 751)

— generate interrupt request signals (ADC1 END IRQ, ADC2 END IRQ, INTV IRQ) independent of the engine revolution which are for normal engine operation allotted to the priority levels of main tasks (AD1 IN, AD1ST, AD2IN, AD2ST, RPMIN; CARBC, IGN, CAC, DWL CAL; LAMBDA; HOSEI), whereby, for controlling the normal engine operation, the main tasks are activated upon request by the interrupt request signals at predetermined time intervals independently of the rotational speed of the engine by task activation signals (Q) set by the digital computer upon coincidence of the count values of counters (CNTR0, CNTR1, CNTR2, CNTR3) being provided for each of the priority levels with preset values (TTM0, TTM1, TTM2, TTM3) representing the task activation time intervals and

— include logic means (751) for combining the interrupt request signals to a combined interrupt signal (IRQ) which is transmitted to the CPU (102) through a single line, and

— status register means (198; FF740, FF746, FF764, FF768) storing the respective interrupt request signals, whereby the contents of the status register means can be examined by the CPU (102) for determining the cause for the interrupt signal (IRQ) being generated.

## Patentansprüche

1. Verfahren zur Steuerung einer Brennkraftmaschine mit folgenden Schritten:

0 017 219

— Erfassen von Betriebsbedingungen des Motors,
— Berechnen einer Mehrzahl von Motorsteuergrößen auf der Grundlage der jeweils erfaßten Signale mit Hilfe von

Tasks, die von einem Digitalrechner in einer vorbestimmten Vorrangebenenfolge entsprechend dem Einfluß der zu berechnenden Motorsteuergröße auf den Motorbetrieb durchgeführt und von einer Mehrzahl Unterbrechungssignale, die jeweils einen vorbestimmten Takt haben, aktiviert oder anderweitig durch die Unterbrechungssignale unterbrochen werden,

wobei die Unterbrechungssignale den Vorrangebenen der Tasks zugeordnet sind, so daß die Durchführung von Tasks mit niedrigerer Vorrangebene immer dann unterbrochen wird, wenn ein Task mit höherer Vorrangebene durchzuführen ist, und nach der Durchführung der jeweiligen Tasks mit höherer Vorrangebene der unterbrochene Task entweder fortgesetzt oder alternativ ein anderer Task durchgeführt wird, und
— Umsetzen der berechneten Motorsteuergrößen in Aktivierungsgrößen für die Stellelemente des Motors, dadurch gekennzeichnet, daß
— von der Motordrehzahl unabhängige Unterbrechungsanforderungssignale (ADC1 END IRQ, ADC2 END IRQ, INTV IRQ) erzeugt werden, die die Aktivierung oder Unterbrechung von den normalen Motorbetrieb steuernden Haupttasks (AD1IN, AD1ST, AD2IN, AD2ST, RPMIN; CARBC, IGN CAL, DWL, CAL; LAMBDA; HOSEI) anfordern,
— die Zeitintervalle der jeweiligen Unterbrechungsanforderungssignale den Vorrangebenen der Haupttasks zugeordnet werden und
— die Haupttasks mit der jeweiligen Vorrangebene auf Anforderung durch die Unterbrechungsanforderungssignale in vorbestimmten Zeitintervallen unabhängig von der Drehzahl des Motors aktiviert werden durch Taskaktivierungssignale (Q), die vom Digitalrechner bei Koinzidenz der Zählwerte von Zählern (CNTR0, CNTR1, CNTR2, CNTR3), die für jede Vorrangebene vorgesehen sind, mit vorgegebenen Werten (TTM0, TTM1, TTM2, TTM3), die die Taskaktivierungs-Zeit-intervalle bezeichnen, gesetzt werden.

2. Verfahren nach Anspruch 1, gekennzeichnet durch Erfassen, für welchen Haupttask der Mehrzahl Tasks ein Taskaktivierungssignal (Q) gesetzt wurde, und Suchen des Tasks mit der höchsten Vorrangebene unter den Tasks, für die die Aktivierungsanforderung gesetzt ist.

3. Verfahren nach Anspruch 2, dadurch gekennzeichnet, daß die Erfassung umfaßt

— Bestimmen derjenigen Tasks, die zu der Aktivierungszeit erreicht werden.

4. Verfahren nach einem der Ansprüche 2 und 3, dadurch gekennzeichnet, daß der Suchschritt umfaßt

— sequentielles Erfassen der Anwesenheit eines Taskaktivierungssignals (Q) aus dem Taskprogramm mit der höchsten Vorrangebene.

5. Verfahren nach einem der Ansprüche 1—4, gekennzeichnet durch Setzen einer Programmausführungsanzeige (R) bei Aktivierung eines Taskprogramms.

6. Verfahren nach Anspruch 5, gekennzeichnet durch

— Rücksetzen der Programmausführungsanzeige (R) für das ausgeführte Taskprogramm und erneutes Aktivieren des Suchvorgangs.

7. Verfahren nach einem der Ansprüche 1—6, dadurch gekennzeichnet, daß Tasksteuerwörter (TCW), die das Taskaktivierungssignal und den entsprechenden Zähler (CNTR) umfassen, den jeweiligen Vorrangebenen der Tasks zugeordnet und zusammen mit einer ersten änderbaren Bitstelle, die anzeigt, daß der zugehörige Task gerade ausgeführt wird oder unterbrochen ist, gespeichert sind.

8. Verfahren nach Anspruch 7, dadurch gekennzeichnet, daß die Tasksteuerwörter eine zweite änderbare Bitstelle umfassen, die der Anwesenheit einer Aktivierungsanforderung für den zugehörigen Task zugeordnet ist.

9. Einrichtung zum elektronischen Steuern von Brennkraftmaschinen gemäß dem Verfahren nach Anspruch 1, umfassend

— Fühler (132, 134, 136, 140, 142, 144, 146, 148, 150, 152, 1024), die die Betriebszustände des Motors erfassen,
— eine Zentraleinheit (CPU 102) zur digitalen arithmetischen Verarbeitung der Fühler-Ausgangssignale durch Ausführung einer Mehrzahl Tasks, deren jeder eine entsprechende Vorrangebene hat, und zur Erzeugung von digitalen Steuersignalen zur Steuerung des Motors,
— eine Ein-/Ausgabe-Einheit (108), die zwischen die CPU (102), die Fühler und eine Mehrzahl Stellelemente (16, 18, 20, 22, 170, 188, 190, 1012, 62, 1062, 90, 1032) geschaltet ist und digitale Eingangssignale für die CPU (102) auf der Grundlage von von den Fühlern erzeugten elektrischen Signalen liefert und Digitalsignale als Betätigungssignale für die Stellelemente erzeugt,

—einen RAM (106), einen ROM (104) und

—Unterbrechungssignalerzeugungsmittel, die immer dann Unterbrechungssignale zur Aktivierung der Tasks und zur Unterbrechung von Tasks niedrigerer Vorrangebenen bei Auftreten entsprechender Unterbrechungssignale (ADC$_1$ END IRQ, ADC$_2$ END IRQ, INTV IRQ), wenn ein Task mit höherer Vorrangebene auszuführen ist, erzeugen, so daß der unterbrochene Task fortgesetzt oder ein anderer Task ausgeführt wird, nachdem ein entsprechender Task mit höherer Vorrangebene ausgeführt ist, dadurch gekennzeichnet, daß

die Unterbrechungssignalerzeugungsmittel (735—740, 747, 748, 751)

—unabhängig von der Motordrehzahl Unterbrechungsanforderungssignale (ADC1 END IRQ, ADC2 END IRQ, INTV IRQ) erzeugen, die für normalen Motorbetrieb den Vorrangebenen von Haupttasks (AD1IN, AD1ST, AD2IN, AD2ST, RPMIN; CARBC, IGN, CAC, DWL CAL; LAMPDA; HOSEI) zugeordnet sind, so daß zur Steuerung des normalen Motorbetriebs die Haupttasks auf Anforderung durch die Unterbrechungsanforderungssignale in vorbestimmten Zeitintervallen unabhängig von der Motordrehzahl aktiviert werden durch Taskaktivierungssignale (Q), die vom Digitalrechner bei Koinzidenz der Zählwerte von für jede der Vorrangebenen vorgesehenen Zählern (CNTR0, CNTR1, CNTR2, CNTR3) mit vorgegebenen Werten (TTM0, TTM1, TTM2, TTM3), die die Taskaktivierungs-Zeitintervalle bezeichnen, gesetzt werden, und

—eine Logikeinheit (751), die die Unterbrechungsanforderungssignale zu einem kombinierten Unterbrechungssignal (IRQ) verknüpft, das auf einer Einzelleitung an die CPU (102) übermittelt wird, sowie

—Statusregister (198; FF740, FF746, FF764, FF768) aufweisen, die die jeweiligen Unterbrechungsanforderungssignale speichern,

so daß die Inhalte der Statusregister von der CPU (102) geprüft werden können, um den Grund für die Erzeugung des Unterbrechungssignals (IRQ) zu ermitteln.


**Revendications**

1. Procédé pour commander un moteur à combustion interne, comprenant les étapes opératoires suivantes consistant à:

—détecter des conditions de fonctionnement du moteur,

—calculer une pluralité de grandeurs de commande du moteur sur la base des signaux respectifs détectés, respectivement à l'aide de

taches, qui sont exécutées par un calculateur numérique selon une séquence prédéterminée de niveaux de priorité, correspondant à l'influence de la grandeur de commande du moteur devant être calculée lors du fonctionnement du moteur et déclenchée par une pluralité de signaux d'interruption possédant chacun un cadencement prédéterminé au interrompue par ailleurs par lesdits signaux d'interruption,

les intervalles des signaux d'interruption étant alloués aux niveaux de priorité des tâches, ce qui a pour effet que l'exécution des tâches possédant un niveau de priorité inférieur est interrompue chaque fois qu'une tâche à niveau de priorité supérieur doit être exécutée et qu'après l'exécution des tâches respectives à niveau de priorité supérieur, la tâche interrompue est poursuivie ou, sinon, une autre tâche est exécutée, et

—convertir les grandeurs de commande du moteur, qui sont calculées, en des grandeurs d'actionnement, pour les dispositifs d'actionnement du moteur, caractérisé en ce que

—des signaux de demande d'interruptions (ADC1 END IRQ, ADC2 END IRQ, INTV IRQ), indépendants de la vitesse de rotation du moteur, sont produits pour la demande de l'activation ou de l'interruption de tâches principales (AD1IN, AD1ST, AD2IN, AD2ST, RPMIN; CARBC, IGN CAL, DWL, CAL; LAMBDA; HOSEI) commandant le fonctionnement normal du moteur.

—les intervalles de temps de signaux respectifs de demande d'interruptions sont affectés aux niveaux de priorité des tâches principales, et

—les tâches principales possédant le niveau de priorité respectif sont activées lors de la demande effectuée par lesdits signaux de demande d'interruptions, à des intervalles de temps prédéterminés, indépendamment de la vitesse de rotation du moteur, au moyen de signaux (Q) d'activation des tâches, positionnés par le calculateur numérique lors de la coïncidence des valeurs comptées de compteur (CNTR0, CNTR1, CNTR2, CNTR3) qui sont délivrées pour chacun des niveaux de priorité, avec des valeurs préréglées (TTM0, TTM1, TTM2, TTM3) représentant les intervalles de temps d'activation des tâches.


2. Procédé selon la revendication 1, caractérisé en ce qu'on détecte pour quelle tâche principale parmi la pluralité des tâches un signal (Q) d'activation de tâche a été positionné, et on recherche la tâche possédant le niveau de priorité maximum parmi celles, sur lesquelles ladite demande d'activation est positionnée.

**0 017 219**

3. Procédé selon la revendication 2, caractérisé en ce que la détection inclut:

— la détermination des tâches, qui sont atteintes à l'instant d'activation.

4. Procédé selon l'une des revendications 2 et 3, caractérisé en ce que l'étape de recherche consiste à

— détecter si un signal (Q) d'activation d'une tâche est présent de façon séquentielle à partir du programme des tâches possédant le niveau de priorité pe plus élevé.

5. Procédé selon l'une des revendications 1 à 4, caractérisé par
le réglage d'une indication de déroulement (R) lors de l'activation d'un programme de tâches.

6. Procédé selon la revendication 5, caractérisé par

— un nouveau positionnement de l'indication de déroulement (R) pour le programme de tâches, qui a été exécuté, et un nouveau déclenchement de ladite recherche.

7. Procédé selon l'une des revendications 1 à 6, caractérisé en ce que les mots (TCW) de commande de tâches incluant le signal d'activation des tâches et l'état de comptage respectif (CNTR) sont associés aux niveaux respectifs de priorité des tâches et sont mémorisés de concert avec un première position binaire modifiable indiquant que la tâche associée est en cours d'exécution ou est interrompue.

8. Procédé selon la revendication 7, caractérisé que les mots de commande des tâches comprennent une seconde position binaire modifiable affectée à la présence d'une demande d'activation pour la tâche associée.

9. Appareil pour commander par voie électronique des moteurs à combustion interne selon le procédé de la revendication 1, comprenant

— des capteurs (132, 134, 136, 140, 142, 144, 146, 148, 150, 152, 1024) détectant les conditions de fonctionnement du moteur,

— une unité centrale de traitement (CPU 102) pour réaliser le traitement arithmétique numérique des signaux de sortie des capteurs en exécutant une pluralité de tâches possédant chacune un niveau de priorité correspondant, et pour produire des signaux de commande numériques pour commander le moteur,

— un dispositif d'entrée/sortie (108) branché entre l'unité (CPU 102), les capteurs et une pluralité de dispositifs d'actionnement (16, 18, 20, 22, 170, 188, 190, 1012, 62, 1062, 90, 1032) pour délivrer des signaux d'entrée numériques pour l'unité CPU (102) sur la base des signaux électriques délivrés par les capteurs, et pour produire des signaux numériques en tant que signaux d'actionnement pour les dispositifs d'actionnement,

— une mémoire RAM (106), une mémoire ROM (104), et

— des moyens de production de signaux d'interruption, produisant des signaux d'interruption pour activer les tâches et interrompre des tâches possédant des niveaux de priorité inférieurs lors de l'apparition de signaux d'interruption correspondants (ADC₁ END IRQ, ADC₂ END IRQ, INTV IRQ), toutes les fois qu'une tâche possédant un niveau de priorité supérieur doit être exécutée, ce qui a pour effet que la tâche, qui est interrompue, est poursuivie ou qu'une autre tâche est exécutée après l'exécution de la tâche respective de niveau supérieur, caractérisé en ce que les moyens (735, 740, 747, 748, 751) de production de signaux d'interruption

— produisent des signaux de demande d'interruptions (ADC1 END IRQ, ADC2 END IRQ, INTV IRQ) indépendants de la vitesse de rotation du moteur et qui sont affectés aux niveaux de priorité de tâches principales (AD1IN, AD1ST, AD2IN, AD2ST, RPMIN; CARBC, IGN, CAC, DWL CAL; LAMDA; HOSEI), pour un fonctionnement normal du moteur, ce qui a pour effet que, pour commander le fonctionnement normal du moteur, les tâches principales sont activées lors de la demande effectuée par des signaux de demande d'interruptions à des intervalles de temps prédéterminés, indépendamment de la vitesse de rotation du moteur, au moyen de signaux (Q) d'activation de tâches, positionnés par la calculateur numérique lors de la coïncidence des valeurs comptées des compteurs (CNTR0, CNTR1, CNTR2, CNTR3), qui sont prévues pour chacun des niveaux de priorité, avec des valeurs préréglées (TTM0, TTM1, TTM2, TTM3) représentant des intervalles de temps d'activation des tâches, et

— incluent des moyens logiques (751) pour combiner les signaux de demande d'interruptions à un signal d'interruption combiné (IRQ), qui est transmis à l'unité CPU (102) par l'intermédiaire d'une ligne, et

— des moyens formant registres d'états (198; FF740, FF746, FF764, FF768) mémorisant les signaux respectifs de demande d'interruptions, ce qui a pour effet que le contenu des moyens formant registres d'états peut être examiné par l'unité CPU (102) pour déterminer la cause du signal d'interruption (IRQ), qui est produit.

FIG. I

FIG. 2

FIG. 3

## F I G. 4

F I G. 5

## FIG. 6

ROM 104

OS PROGRAM

| ADDRESS | | |
|---|---|---|
| A 000 | IRQ ANAL | PROG0 |
| A 100 | TASK-SCHEDULER | |
| A 200 | EXIT | |
| A 300 | | |
| A 400 | INITIALIZ | |
| A 500 | MONIT | |
| A 600 | ENST TASK | |
| A 700 | AD I IN | |
| A 800 | AD I ST | |
| A 900 | AD 2 IN | PROG I |
| A A00 | AD 2 ST | |
| A B00 | RPMIN | |
| A C00 | CARBC | |
| A D00 | IGNCAL | PROG 2 |
| A E00 | DWLCAL | |
| A F00 | LAMBDA | PROG 3 |
| B 000 | HOSEI | PROG 4 |
| B 100 | FISC | PROG 5 |
| B 200 | EGRCAL | |
| B 300 | TSA | |
| B 400 | TTM | |
| B 500 | DATA | |
| B 600 | ADV MAP | |
| B 700 | AF MAP | |
| B 800 | EGR MAP | |

## FIG. 7

RESET & START
∇ ~202
~204

| INITIALIZATION OF STACK POINTER | ~282 |
|---|---|

| CLEARING READ/ WRITE MEMORY | ~284 |
|---|---|

| INITIALIZATION OF INPUT/OUTPUT INTERFACE REGISTERS | ~286 |
|---|---|

| INITIALIZATION OF ADC1 | ~288 |
|---|---|

| WAITING FOR COMPLETED A-D CONVERSION (GENERATION OF END INTERRUPT) | ~290 |
|---|---|

NO — FETCHING OF DATA FROM ADC1 HAS BEEN COMPLETED ? ~292

| SETTING OF INITIAL VALUE FOR IGNITION TIMING $\theta_{ADV}(START) = f_1(T_W)$ | ~294 |
|---|---|

| SETTING OF INITIAL VALUE FOR DUTY CYCLE OF AIR SOLENOID $D_{AIR}(START) = f_2(T_W)$ | ~296 |
|---|---|

| SETTING OF INITIAL VALUE FOR DUTY CYCLE OF FUEL SOLENOID $D_{FUEL}(START) = f_3(T_W)$ | ~298 |
|---|---|

FIG. 8

FROM 204

206

IS START-SW TURNED ON ? — 302

YES

IS ENGINE BEING STARTED ? — 304

YES

NO

FUEL PUMP 190 IS INITIATED — 306

INHIBITION OF INTV IRQ IS REMOVED AND STARTER FLAG IS SET — 308

GENERATION OF "GO" SIGNAL FOR I/OLSI SETTING "H" TO MODE REG — 310

HAS ENGINE BEEN STARTED ? — 312

NO

YES

INHIBITION OF ENST IRQ IS REMOVED. ADC I END IRQ AND ADC 2 END IRQ ARE INHIBITED. — 314

FIG. 9

$\theta_{ADV(ST)}$

IGNITION TIMING FOR ENGINE START (DEG)

$\theta_{ADV\,2}$

$\theta_{ADV\,1}$

TDC

Tw1    Tw2    Tw

TEMPERATURE OF COOLING WATER (°C)

## FIG. 10

Y-axis: OPENING DEGREE OF FUEL VALVE $D_{FUEL}$(%)

X-axis: TEMPERATURE OF COOLING WATER Tw (°C)

## FIG. 11

Y-axis: OPENING DEGREE OF AIR VALVE $D_{AIR}$ (%)

X-axis: TEMPERATURE OF COOLING WATER Tw (°C)

# 0 017 219

FI G. 12

**EGRCAL / FISC**

**410** IS IDLE SWITCH ON ? — NO (EGR)

YES (FISC)

**412** AIR SOLENOID VALVE IS SELECTED(A/E SELECT=A)

**414** $D_{AIR} = f_1(T_W)$ IS SET AT EGRD REG

**416** $D_{FUEL} = f_2(T_W)$ IS SET AT **FSCD** REG

**208**

**418** EXHAUST GAS RECIRCULATION IS EFFECTED (A/E SELECT=E)

**420** $D_{FUEL} = 0\%$ IS SET AT **FSCD** REG

**422** YES — $T_W \geq TA$ °C ?

NO

**424** YES — $T_W \leq TB$ °C ?

NO

**426** VALUE FOR EGR CUT IS SET

**428** EGR CAL

$VC$ — $D_{EGR} = f(N, VC)$

$N$

**430** VALUE FOR EFFECTING EGR IS SET AT EGRD REG

8

## F I G. 13

FIG. 14

TASK SCHEDULER

530 TASK LEVEL n MUST BE EXECUTED? — YES

NO

532 TASK LEVEL "n" IS INCREMENTED TO (n+1)

534 INCREMENTED n=MAX ? — NO

YES

536 RTI

TO 208

538 IS TASK OF LEVEL "n" BEING INTERRUPTED ? — YES

NO

540 RTI

542 ACTIVATION REQUEST FLAG FOR TASK OF LEVEL n IS RESET

544 RUN FLAG IS SET FOR TASK OF LEVEL n

546 START ADDRESS FOR TASK OF LEVEL n IS RETRIEVED

548 JUMP TO RETRIEVED ADDRESS

242

TASK LEVEL n

FIG. 15

ROM (104)

| PROG 0 (O.S.) |
| PROG (1) 252 |
| PROG (2) 254 |
| PROG (3) 256 |
| PROG (4) 258 |
| PROG (5) (BACK-GROUND JOB) 208 |

TASK START ADDRESS

| TSA 0 |
| TSA 1 |
| TSA 2 |
| TSA 3 |

TASK TIMER

| TTM 0 |
| TTM 1 |
| TTM 2 |
| TTM 3 |

RAM (106)

INPUT DATA QA(ORVC)
INPUT DATA N
DATA VB
DATA TW
DATA TA
DATA VR
DATA $\theta$TH
DATA $\lambda$

b7 b6 b5 ~ b0

| R | Q | | CNTR 0 | TCW0 |
| R | Q | | CNTR 1 | TCW1 |
| R | Q | | CNTR2 | TCW2 |
| R | Q | | CNTR3 | TCW3 |

SWITCHING COUNTER FOR MPX

STARTER FLAG

STANDBY AREA (602)

FIG. 16

EXIT

562

HAS TASK LEVEL n BEEN ENDED ?

YES

568

RUN INDICATION FLAG R FOR TASK LEVEL n IS RESET

NO

564

n IS INCREMENTED TO (n+1)

260

TASK SCHEDULER

FIG. 18

QUEUE

IDLE

RUN

READY

FIG. 19

READY

RUN

# FIG. 17

OS PROGRAM

LEVEL 0
PROGRAM 252

t3
END

t7
END

LEVEL 1
PROGRAM 254

t5
INTERRUPT

t9
END

RE-INITIATION

LEVEL 2
PROGRAM 256

t11
END

LEVEL 3
PROGRAM 258

BACK GROUND
JOB 208

t1
INTERRUPT

RE-INITIATION

t13 END

TIME

# FIG. 20

( SFTMRO )

| ADC 1 IN | 650 |

ENGINE IS NOT YET STARTED ? — 652
YES → RT2
NO ↓

| ADC 1 ST | 654 |

| ADC 2 IN | 656 |

| ADC 2 ST | 658 |

| FETCHING OF N | 660 |

252

( EXIT )

# FIG. 25

▽

| SETTING OF STACK POINTER | 282 |

| CLEARING OF MEMORY | 284 |

| INITIALIZATION OF I/O INTERFACE 108 | 286 |

| INITIATION OF ADC 1 AND INHIBITION REMOVAL OF ADC 1 END IRQ | 288 |

| FETCHING OF ADC 1 END IRQ DATA | 290 |

ALL DATA FROM ADC 1 FETCHED ? — 292
N

| INITIALIZATION OF IG-NITION TIMING $\theta_{ADV}(ST) = f_1(Tw)$ | 294 |

| INITIALIZATION OF AIR BYPASS VALVE | 296' |

| SETTING FUEL QUANTITY FOR STARTING ENGINE | 298' |

204

14

0 017 219

FIG. 21

SFTMRI

BEING STARTED? 672

YES

NO

CARB CAL

VC | $D_{FLAT} = f_1(N, VC)$ |

N

674

IGNCAL

676

VC | $\theta_{ADV} = f_2(N, VC)$ |

N

254

DWLCAL

IGNITION TIMING IS
CALCULATED
THROUGH DWLCAL

678

EXIT

# F I G. 22

F I G. 23

F I G. 24

# FIG. 26

FUEL INJECTION TIME

COOLING WATER TEMPERATURE TW (℃)

# F I G. 27

EGRCON
FISCCON

IS IDLE SW ON ? —410 ———NO(EGR)

YES (FISC)

EGRD IS SET TO ZERO —412

DUTY OF AIR BYPASS VALVE IS DETERMINED —414

DATA ISOD IS SET —416

ISCD IS SET TO ZERO —420

TW > TA ? —422

YES | NO

TW < TB ? —424

YES | NO

$D_{EGR} \cdot CAL$

EGRD IS SET TO ZERO

—426

QA | $D_{EGR} = f(N, QA)$

N

—428

$D_{EGR}$ IS SET TO EGRD

—430

208

19

F I G. 28

# FIG. 29

# FIG. 30

FIG. 31

CPU

DDR 192

872
874
876
878
880
882
884
886

DOUT 194

892
894
896
898
899
900
902

904  DIO6  DIO4  DIO2  DIO0

DIO7  DIO5  DIO3  DIO1

FIG. 33

(A) TDC PULSE

(B) REF PULSE

(C) COUNTER 904
(D) SIGNAL A

SIGNAL B

(E) FF 908

(F) SIGNAL C

SIGNAL D

(G) TIMER 916

(H) FF 920

(I) GATE 136

TIME

0 017 219

# F I G. 32